(19) Europäisches Patentamt
European Patent Office
Office européen des brevets

(11) **EP 4 765 661 A1**

(12) **EUROPEAN PATENT APPLICATION**
published in accordance with Art. 153(4) EPC

(43) Date of publication:
**24.06.2026 Bulletin 2026/26**

(21) Application number: **23949296.0**

(22) Date of filing: **18.08.2023**

(51) International Patent Classification (IPC):
**H04B 7/0456** (2017.01)

(52) Cooperative Patent Classification (CPC):
**H04B 7/0456**

(86) International application number:
**PCT/CN2023/113703**

(87) International publication number:
**WO 2025/039101 (27.02.2025 Gazette 2025/09)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **1FINITY INC.
Kawasaki-shi, Kanagawa 211-8588 (JP)**

(72) Inventors:
• **WANG, Guotong
Beijing 100022 (CN)**
• **WANG, Xin
Beijing 100022 (CN)**

(74) Representative: **Haseltine Lake Kempner LLP
Cheapside House
138 Cheapside
London EC2V 6BJ (GB)**

(54) **PRECODING CONFIGURATION METHOD AND APPARATUS**

(57) Embodiments of this disclosure provide a precoding configuration method and apparatus. The method includes: a terminal equipment receives configuration information from a network device, wherein for sounding reference signal resources in a sounding reference signal resource set in which a first parameter (usage) is set to be a first value (codebook), different numbers of antenna ports are configured, and at least one sounding reference signal resource is configured with 8 ports; an antenna group number Ng and corresponding precoder(s) are configured for 8-port transmission of the terminal equipment and a codebook subset is configured for 4-port/2-port transmission of the terminal equipment, or, an antenna group number Ng and corresponding precoder(s) are configured for 8-port transmission of the terminal equipment.

501

> A terminal equipment transmits capability information to a network device; the capability information includes at least one or more of the following: an antenna group number Ng supported for 8 ports, a codebook subset supported for 4ports/2 ports, or combination information between the supported Ng and the codebook subset

502

> the terminal equipment receives configuration information from a network device, wherein for SRS resources in a SRS resource set in which usage is set to be codebook, different numbers of antenna ports are configured, and at least one SRS resource is configured with 8 ports; Ng and corresponding precoders are configured for 8-port transmission of the terminal equipment and a codebook subset is configured for 4-port/2-port transmission of the terminal equipment, or, Ng and corresponding precoders are configured for 8-port transmission of the terminal equipment

**Fig. 5**

## Description

Technical Field

This disclosure relates to the field of communication technologies.

Background

In a fifth generation (5G) mobile communication system or a new radio (NR) mobile communication system, prior to Rel-18, a terminal equipment (UE) may support up to 4Tx for uplink transmission. According to coherence types of terminal equipments, they can be divided into non-coherent UEs, partial coherent UEs, and full coherent UEs. In NR Rel-15, a concept of codebook subsets is introduced, and corresponding codebook subsets may be configured according to the coherence types of the terminal equipments.

On the other hand, a feature of uplink full-power transmission is introduced into Rel-16, which may increase uplink transmission power of a terminal equipment supporting uplink MIMO. The uplink full-power transmission includes Mode 0, Mode 1, and Mode 2, which may be referred to as full-power mode 0 (ul-FullPwrMode), full-power mode 1 (ul-FullPwrMode1) and full-power mode 2 (ul-FullPwrMode2).

It should be noted that the above description of the background is merely provided for clear and complete explanation of this disclosure and for easy understanding by those skilled in the art. And it should not be understood that the above technical solution is known to those skilled in the art as it is described in the background of this disclosure.

Summary

In NR Rel-18, the uplink transmission of the terminal equipment may support 8Tx, and a concept of antenna group is introduced. Numbers of antenna groups (Ng) supported by different coherence types are different. For a full coherent UE, Ng = 1. For a partial coherent UE, one instance is that the UE has two antenna groups, Ng = 2, and the other instance is that the UE has four antenna groups, Ng = 4. For a non-coherent UE, Ng = 8. Correspondingly, for full coherent precoder, Ng = 1, for partial coherent precoder, Ng = 2 or Ng = 4, and for non-coherent precoder, Ng = 8.

It was found by the inventors that for an 8Tx terminal equipment supporting full-power mode 2, if sounding reference signal (SRS) resources in a SRS resource set are configured with different numbers of antenna ports and at least one SRS resource is configured with 8 ports, an Ng value needs to be configured for operations of the 8 ports, and a codebook subset needs to be configured for operations 4 ports/2 ports. However, there is currently no clear solution on how to configure the Ng and the codebook subset and whether they are configured independently.

In order to solve at least one of the above problems, embodiments of this disclosure provide a precoding configuration method and apparatus.

According to one aspect of the embodiments of this disclosure, there is provided a precoding configuration method, applicable to a terminal equipment capable of supporting 8-transmission (8Tx) uplink transmission, the terminal equipment supporting full-power mode 2, the method including:

receiving configuration information by the terminal equipment from a network device,
wherein for sounding reference signal resources in a sounding reference signal resource set in which a first parameter (usage) is set to be a first value (codebook), different numbers of antenna ports are configured, and at least one sounding reference signal resource is configured with 8 ports; an antenna group number Ng and corresponding precoder(s) are configured for 8-port transmission of the terminal equipment and a codebook subset is configured for 4-port/2-port transmission of the terminal equipment, or, an antenna group number Ng and corresponding precoder(s) are configured for 8-port transmission of the terminal equipment.

According to another aspect of the embodiments of this disclosure, there is provided a precoding configuration apparatus, configured in a terminal equipment capable of supporting 8-transmission (8Tx) uplink transmission, the terminal equipment supporting full-power mode 2, the apparatus including:

a receiving unit configured to receive configuration information from a network device,
wherein for sounding reference signal resources in a sounding reference signal resource set in which a first parameter (usage) is set to be a first value (codebook), different numbers of antenna ports are configured, and at least one sounding reference signal resource is configured with 8 ports; an antenna group number Ng and corresponding precoder(s) are configured for 8-port transmission of the terminal equipment and a codebook subset is configured for 4-port/2-port transmission of the terminal equipment, or, an antenna group number Ng and corresponding precoder(s) are configured for 8-port transmission of the terminal equipment.

According to a further aspect of the embodiments of this disclosure, there is provided a precoding configuration method, applicable to a network device, the method including:

transmitting configuration information by the network device to a terminal equipment,
wherein for sounding reference signal resources in a sounding reference signal resource set in which a first parameter (usage) is set to a first value (codebook), different numbers of antenna ports are configured, and at least one sounding reference signal resource is configured with 8 ports; an antenna group number Ng and corresponding precoder(s) are configured for 8 -port transmission of the terminal equipment and a codebook subset is configured for 4-port/2-port transmission of the terminal equipment, or, an antenna group number Ng and corresponding precode(s) are configured for 8-port transmission of the terminal equipment.

According to still another aspect of the embodiments of this disclosure, there is provided a precoding configuration apparatus, configured in a network device, the apparatus including:

a transmitting unit configured to transmit configuration information to a terminal equipment,
wherein for sounding reference signal resources in a sounding reference signal resource set in which a first parameter (usage) is set to a first value (codebook), different numbers of antenna ports are configured, and at least one sounding reference signal resource is configured with 8 ports; an antenna group number Ng and corresponding precoder(s) are configured for 8-port transmission of the terminal equipment and a codebook subset is configured for 4-port/2-port transmission of the terminal equipment, or, an antenna group number Ng and corresponding precoder(s) are configured for 8-port transmission of the terminal equipment.

According to yet another aspect of the embodiments of this disclosure, there is provided a communication system, including:

a terminal equipment that is capable of supporting 8Tx uplink transmission and supporting full-power mode 2; the terminal equipment is configured to receive configuration information from a network device, wherein for sounding reference signal resources in a sounding reference signal resource set in which a first parameter (usage) is set to a first value (codebook), different numbers of antenna ports are configured, and at least one sounding reference signal resource is configured with 8 ports; an antenna group number Ng and corresponding precoder(s) are configured for 8-port transmission of the terminal equipment and a codebook subset is configured for 4-port/2-port transmission of the terminal equipment, or, an antenna group number Ng and corresponding precoder(s) are configured for 8-port transmission of the terminal equipment; and
a network device configured to transmit the configuration information.

An advantage of the embodiments of this disclosure exists in that for an 8Tx UE supporting full-power mode 2, if SRS resources in an SRS resource set are configured with different numbers of antenna ports and at least one SRS resource is configured with 8 ports, how an Ng and a codebook subset are configured can be clarified.

With reference to the following description and drawings, the particular embodiments of this disclosure are disclosed in detail, and the principle of this disclosure and the manners of use are indicated. It should be understood that the scope of the embodiments of this disclosure is not limited thereto. The embodiments of this disclosure contain many alternations, modifications and equivalents within the spirits and scope of the terms of the appended claims.

Features that are described and/or illustrated with respect to one embodiment may be used in the same way or in a similar way in one or more other embodiments and/or in combination with or instead of the features of the other embodiments.

It should be emphasized that the term "comprise/include" when used in this specification is taken to specify the presence of stated features, integers, steps or components but does not preclude the presence or addition of one or more other features, integers, steps, components or groups thereof.

Brief Description of the Drawings

Elements and features depicted in one drawing or embodiment of the invention may be combined with elements and features depicted in one or more additional drawings or embodiments. Moreover, in the drawings, like reference numerals designate corresponding parts throughout the several views and may be used to designate like or similar parts in more than one embodiments.

FIG. 1 is schematic diagram of a communication system of an embodiment of this disclosure;
FIG. 2 is a schematic diagram of a configuration of a codebook subset;

FIG. 3 is another schematic diagram of the configuration of the codebook subset;

FIG. 4 is a schematic diagram of Ng values and corresponding precoders;

FIG. 5 is a schematic diagram of the precoding configuration method of an embodiment of this disclosure;

FIG. 6 is a schematic diagram of a configuration of an Ng value and a configuration of a codebook subset of an embodiment of this disclosure;

FIG. 7 is another schematic diagram of the configuration of the Ng value and the configuration of the codebook subset of an embodiment of this disclosure;

FIG. 8 is a further schematic diagram of the configuration of the Ng value and the configuration of the codebook subset of an embodiment of this disclosure;

FIG. 9 is still another schematic diagram of the configuration of the Ng value and the configuration of the codebook subset of an embodiment of this disclosure;

FIG. 10 is yet another schematic diagram of the configuration of the Ng value and the configuration of the codebook subset of an embodiment of this disclosure;

FIG. 11 is yet still another schematic diagram of the configuration of the Ng value and the configuration of the codebook subset of an embodiment of this disclosure;

FIG. 12 is an exemplary diagram of determining a length of a TPMI field of an embodiment of this disclosure;

FIG. 13 is another exemplary diagram of determining the length of the TPMI field of an embodiment of this disclosure;

FIG. 14 is a further exemplary diagram of determining the length of the TPMI field of an embodiment of this disclosure;

FIG. 15 is another schematic diagram of the precoding configuration method of an embodiment of this disclosure;

FIG. 16 is a schematic diagram of the precoding configuration apparatus of an embodiment of this disclosure;

FIG. 17 is another schematic diagram of the precoding configuration apparatus of an embodiment of this disclosure;

FIG. 18 is a schematic diagram of a network device of an embodiment of this disclosure; and

FIG. 19 is a schematic diagram of a terminal equipment of an embodiment of this disclosure.

## Detailed Description

These and further aspects and features of this disclosure will be apparent with reference to the following description and attached drawings. In the description and drawings, particular embodiments of the invention have been disclosed in detail as being indicative of some of the ways in which the principles of the invention may be employed, but it is understood that the invention is not limited correspondingly in scope. Rather, the invention includes all changes, modifications and equivalents coming within the spirit and terms of the appended claims.

In embodiments of this disclosure, terms "first", and "second", etc., are used to differentiate different elements with respect to names, and do not indicate spatial arrangement or temporal orders of these elements, and these elements should not be limited by these terms. Terms "and/or" include any one and all combinations of one or more relevantly listed terms. Terms "contain", "include" and "have" refer to existence of stated features, elements, components, or assemblies, but do not exclude existence or addition of one or more other features, elements, components, or assemblies.

In embodiments of this disclosure, single forms "a", and "the", etc., include plural forms, and should be understood as "a kind of" or "a type of" in a broad sense, but should not defined as a meaning of "one"; and the term "the" should be understood as including both a single form and a plural form, except specified otherwise. Furthermore, the term "according to" should be understood as "at least partially according to", the term "based on" should be understood as "at least partially based on", except specified otherwise.

In embodiments of this disclosure, the term "communication network" or "wireless communication network" may refer to a network satisfying any one of the following communication standards: long term evolution (LTE), long term evolution-advanced (LTE-A), wideband code division multiple access (WCDMA), and high-speed packet access (HSPA), etc.

And communication between devices in a communication system may be performed according to communication protocols at any stage, which may, for example, include but not limited to the following communication protocols: 1G (generation), 2G, 2.5G, 2.75G, 3G, 4G, 4.5G, 5G new radio (NR), and 6G in the future, etc., and/or other communication protocols that are currently known or will be developed in the future.

In embodiments of this disclosure, the term "network device", for example, refers to a device in a communication system that accesses a user equipment to the communication network and provides services for the user equipment. The network device may include but not limited to the following devices: a base station (BS), an access point (AP), a transmission reception point (TRP), a broadcast transmitter, a mobile management entity (MME), a gateway, a server, a radio network controller (RNC), a base station controller (BSC), etc.

The base station may include but not limited to a node B (NodeB or NB), an evolved node B (eNodeB or eNB), a 5G base station (gNB), an IAB donor, etc. Furthermore, it may include a remote radio head (RRH), a remote radio unit (RRU), a relay, or a low-power node (such as a femto, and a pico, etc.). The term "base station" may include some or all of its functions, and each base station may provide communication coverage for a specific geographical area. And a term "cell" may refer to a base station and/or its coverage area, depending on a context of the term.

In embodiments of this disclosure, the term "user equipment (UE)" or "terminal equipment (TE) or terminal device" refers to, for example, an equipment accessing to a communication network and receiving network services via a network device. The user equipment may be fixed or mobile, and may also be referred to as a mobile station (MS), a terminal, a subscriber station (SS), an access terminal (AT), or a station, etc.

The terminal equipment may include but not limited to the following devices: a cellular phone, a personal digital assistant (PDA), a wireless modem, a wireless communication device, a hand-held device, a machine-type communication device, a lap-top, a cordless telephone, a smart cell phone, a smart watch, and a digital camera, etc.

For another example, in a scenario of the Internet of Things (IoT), etc., the terminal equipment may also be a machine or a device performing monitoring or measurement. For example, it may include but not limited to a machine-type communication (MTC) terminal, a vehicle mounted communication terminal, an industrial wireless device, a surveillance camera, a device to device (D2D) terminal, and a machine to machine (M2M) terminal, etc.

Moreover, the term "network side" or "network device side"" refers to a side of a network, which may be a base station or one or more network devices including those described above. The term "user side" or "terminal side" or "terminal equipment side" refers to a side of a user or a terminal, which may be a UE, and may include one or more terminal equipments described above. "A device" may refer to a network device, and may also refer to a terminal equipment.

Scenarios in the embodiments of this disclosure shall be described below by way of examples; however, this disclosure is not limited thereto.

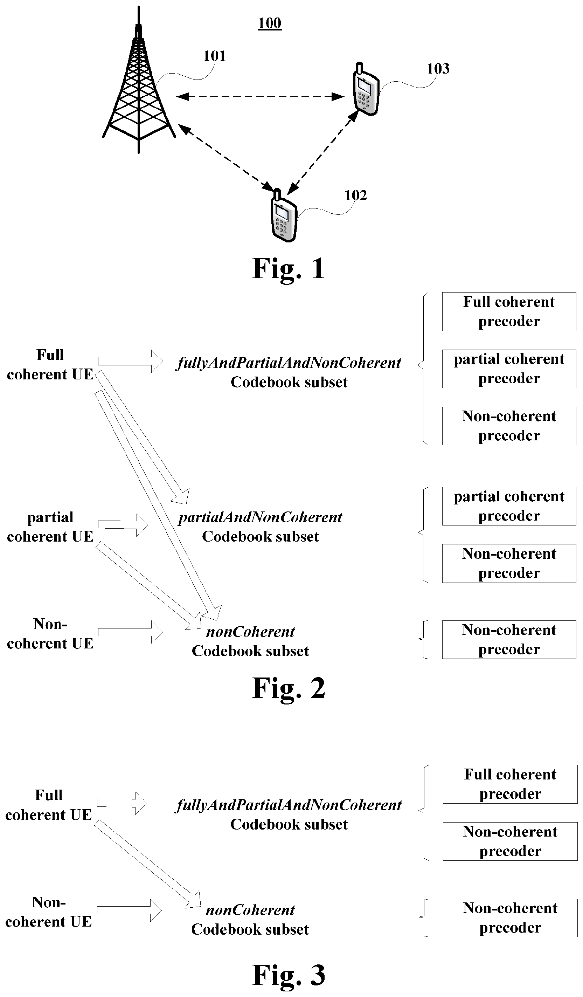

FIG. 1 is a schematic diagram of a communication system of an embodiment of this disclosure, in which a case where terminal equipments and a network device are taken as examples is schematically shown. As shown in FIG. 1, a communication system 100 may include a network device 101 and terminal equipments 102, 103. For the sake of simplicity, an example having only two terminal equipments and one network device is schematically given in FIG. 1; however, the embodiment of this disclosure is not limited thereto.

In the embodiment of this disclosure, existing services or services that may be implemented in the future may be performed between the network device 101 and the terminal equipments 102, 103. For example, such services may include but not limited to an enhanced mobile broadband (eMBB), massive machine type communication (mMTC), and ultra-reliable and low-latency communication (URLLC), etc.

It should be noted that FIG. 1 shows that two terminal equipments 102, 103 are both in coverage of the network device 101. However, this disclosure is not limited thereto, and the two terminal equipments 102, 103 may not be in coverage of the network device 101, or one terminal equipment 102 is in coverage of the network device 101 and the other terminal equipment 103 is out of coverage of the network device 101.

In NR Rel-15, a concept of codebook subset is introduced, and a corresponding codebook subset may be configured according to a coherence type of a terminal equipment. The codebook subset includes: *fullyAndPartialAnd-NonCoherent, partialAndNonCoherent, and nonCoherent;* however, this disclosure is not limited thereto, for example, other terms may also be used. Precoder types contained in different codebook subsets are different.

FIG. 2 is a schematic diagram of a configuration of a codebook subset, in which a configuration of a codebook subset for four antenna ports is shown. FIG. 3 is another schematic diagram of the configuration of the codebook subset, in which a configuration of a codebook subset for two antenna ports is shown.

As shown in FIGs. 2 and 3, corresponding to different coherence types of terminal equipments, a network device (gNB) may configure different precoders. For example, for a full coherent UE, the gNB may configure a full coherent precoder, a partial coherent precoder, and a non-coherent precoder. For a partial coherent UE, the gNB may configure a partial coherent precoder and a non-coherent precoder. For a non-coherent UE, the gNB is only able to configure a non-coherent precoder.

In NR Rel-16, a full power operation mode is introduced, which includes full-power mode 0 (corresponding to a UE capability ul-FullPwrMode and with an RRC parameter ul-FullPowerTransmission set to be fullpower), full-power mode 1 (corresponding to a UE capability ul-FullPwrMode1 and with an RRC parameter ul-FullPowerTransmission set to be fullpowerMode1), and full-power mode 2 (corresponding to a UE capability ul-FullPwrMode2-MaxSRS-ResInSet and with an RRC parameter ul-FullPowerTransmission set to be fullpowerMode2).

For full-power mode 2, SRS resources in an SRS resource set with a parameter 'usage' set to be 'codebook' may be configured with identical numbers of antenna ports, or may be configured with different numbers of antenna ports. For example, the UE may be configured with SRS resources of {1-port, 2-port, 4-port}. In NR Rel-16, full-power mode 2 may be used for a full coherent UE, a partial coherent UE, and a non-coherent UE.

In NR Rel-15, RRC may configure a parameter maxRank to indicate the maximum number of layers allowed for physical uplink shared channel (PUSCH) transmission. A value of maxRank has an impact on a length of a field used for transmitting a transmission precoding matrix indicator (TPMI) in downlink control information (DCI). In NR Rel-15, a maximum value of maxRank is 4.

In NR Rel-18, a concept of antenna group is introduced. The number (Ng) of antenna groups supported by the terminal equipment is dependent on a capability of the terminal equipment. For example, according to a supported Ng value reported by the UE, the gNB may configure one or more precoders corresponding to an Ng value for the UE.

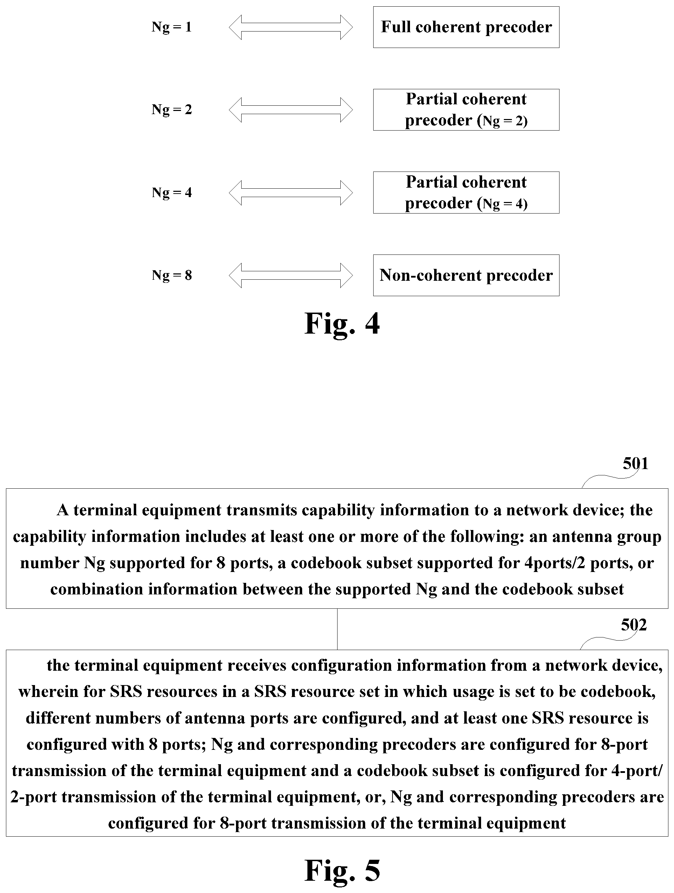

FIG. 4 is a schematic diagram of Ng values and corresponding precoders, showing a correspondence between the Ng values and different types of precoders. In NR Rel-18, PUSCH transmission with up to 8 layers may be supported, and correspondingly, the maximum value of maxRank is also extended to 8.

It was found by the inventors that for the 8Tx UE supporting full-power mode 2, if the SRS resources in the SRS resource set are configured with different numbers of antenna ports and at least one SRS resource is configured with 8 ports, an Ng value needs to be configured for 8-port operations, and a codebook subset needs to be configured for 4-port/2-port operations. However, whether the Ng value and the codebook subset may be configured independently of each other needs to be clearly defined.

In addition, for the 8Tx UE supporting full-power mode 2, if the SRS resources in the SRS resource set are configured with different numbers of antenna ports and at least one SRS resource is configured with 8 ports, when the parameter maxRank is configured to be greater than 4 (e.g. 8), if SRS resources with 4 ports are indicated, there may possibly exist a problem of inconsistent understanding, as for operations of 4 ports, the maximum value of maxRank is 4.

In NR Rel-16/Rel-17, for a UE supporting full-power mode 2, if the SRS resources in the SRS resource set are configured with different numbers of antenna ports, in determining the length of the precoding information and number of layers field (also referred to as a TPMI field in brief) in DCI, there are following definitions in Table 1 in TS38.212 (Section 7.3.1.1.2, Section 7.3.1.1.3):

Table 1

For the higher layer parameter txConfig = codebook, if different SRS resources with different number of antenna ports are configured, the bitwidth is determined according to the maximum number of ports in an SRS resource among the configured SRS resources in all SRS resource set(s) with usage set to 'codebook'. If the number of ports for a configured SRS resource in the set is less than the maximum number of ports in an SRS resource among the configured SRS resources, a number of most significant bits with value set to '0' are inserted to the field.

It can be seen therefrom that the length of the TPMI field in the DCI is dependent on the maximum number of antenna ports of the SRS resources.

However, in Rel-18, for the 8Tx UE supporting full-power mode 2, if the SRS resources in the SRS resource set are configured with different numbers of antenna ports and at least one SRS resource is configured with 8 port, depending on the configuration of the Ng value and the codebook subset, the TPMI field for the 4 ports may possibly be the longest, in which case the scheme defined in Table 1 is unable to work.

A schematic introduction to relevant contents of the embodiments of this disclosure and some problems found by the inventors, and the embodiments of this disclosure shall be further described below.

In the embodiments of this disclosure, high-layer signaling may be, for example, radio resource control (RRC) signaling; for example, it is referred to an RRC message, which includes an MIB, system information, and a dedicated RRC message; or, it is referred to an as an RRC information element (RRC IE). High-layer signaling may also be, for example, medium access control (MAC) signaling, or an MAC control element (MAC CE); however, this disclosure is not limited thereto.

In the following description, without causing confusion, terms "PDCCH", "physical downlink control channel" and "downlink control information" may be replaced mutually, and terms "PDSCH", "physical downlink data channel" and "downlink data" may be replaced mutually. In addition, transmitting or receiving a PDCCH may be understood as transmitting or receiving downlink control information carried by the PDCCH, and transmitting or receiving a PDSCH may be understood as transmitting or receiving downlink data carried by the PDSCH.

Embodiments of a first aspect

The embodiments of this disclosure provide a precoding configuration method, which shall be described from a terminal equipment side capable of supporting 8-transmission (8Tx) uplink transmission, the terminal equipment supporting full-power mode 2. FIG. 5 is a schematic diagram of the precoding configuration method of an embodiment of this disclosure. As shown in FIG. 5, the method includes:

502: a terminal equipment receives configuration information from a network device;
for sounding reference signal resources in a sounding reference signal resource set in which a first parameter (usage) is set to be a first value (codebook), different numbers of antenna ports are configured, and at least one sounding reference signal resource is configured with 8 ports; an antenna group number Ng and corresponding precoder(s) are configured for 8 -port transmission of the terminal equipment, and a codebook subset is configured for 4-port/2-port transmission of the terminal equipment, or, an antenna group number Ng and corresponding precoder(s) are configured for 8-port transmission of the terminal equipment.

It should be noted that FIG. 5 only schematically illustrates the embodiments of this disclosure; however, this disclosure is not limited thereto. For example, an order of execution of operations may be appropriately adjusted, and furthermore, some other operations may be added, or some operations therein may be removed. And appropriate variants may be made by those skilled in the art according to the above contents, without being limited to what is contained in FIG. 5.

In some embodiments, an antenna group number Ng and a corresponding precoder(s) are configured for 8-port transmission of the terminal equipment, and a codebook subset is configured for 4-port/2-port transmission of the terminal equipment.

For example, for an 8Tx UE supporting full-power mode 2, if SRS resources in an SRS resource set are configured with different numbers of antenna ports and at least one SRS resource is configured with 8 port, both the Ng value and the codebook subset should be configured for the UE. precoders to which the Ng value corresponds are applied to PUSCH transmission with the 8 ports, and precoders to which the codebook subset corresponds are applied to PUSCH transmission with ports less than 8 ports (4 port/2 ports).

In the embodiments of this disclosure, gNB also configures a codebook (or precoders) corresponding to the Ng value while configuring the Ng value. The terms "configuring Ng" and "configuring a value of the Ng" are equivalent to or replaceable by "configuring precoder(s) corresponding to an Ng value" and "configuring an Ng and corresponding precoder(s)".

In some embodiments, for a full coherent terminal equipment, a configuration of the antenna group number Ng and a configuration of the codebook subset are independent or separate, and the number of precoded co-phase ports in a 4-port/2-port codebook subset of the terminal equipment does not exceed the maximum number of precoded co-phase ports of 8 ports that the terminal equipment is able to support.

For example, for a full coherent 8Tx UE supporting full-power mode 2, if the SRS resources in the SRS resource set are configured with different numbers of antenna ports and at least one SRS resource is configured with 8 ports, the configuration of the Ng value and the configuration of the codebook subset are independent of each other. The number of precoded co-phase ports in the 4-port/2-port codebook subset should not exceed the maximum number of precoded co-phase ports of the 8 ports that the UE is able to support.

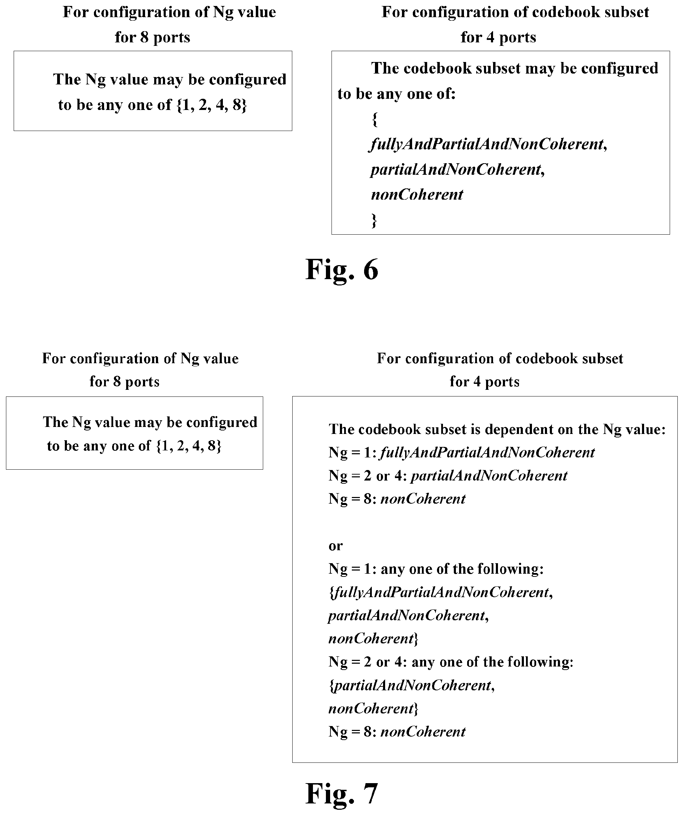

FIG. 6 is a schematic diagram of the configuration of the Ng value and the configuration of the codebook subset of an embodiment of this disclosure, showing a case where the Ng value and the codebook subset are configured independent of each other for the full coherent terminal equipment. In one example, for the full coherent UE, the number of ports of the SRS resources is configured as {8 ports, 4 ports} or {8 ports, 4 ports, 1 port}. As shown in FIG. 6, for the 8 ports, the value of the Ng may be configured to be any one of {Ng=1, 2, 4, 8}. For the 4 ports, the codebook subset may be configured to be any one of *{fullyAndPartialAndNonCoherent, partialAndNonCoherent, nonCoherent}*.

In another example, for the full coherent UE, the number of ports of the SRS resources is configured as {8 ports, 2 ports} or {8 ports, 2 ports, 1 port}. For the 8 ports, the value of the Ng may be configured to be any one of {Ng=1, 2, 4, 8}. For the 2 ports, the codebook subset may be configured to be either one of *{ fullyAndPartialAndNonCoherent, nonCoherent}*.

In a further example, for the full coherent UE, the number of ports of the SRS resources is configured as {8 ports, 4 ports, 2 ports} or {8 ports, 4 ports, 2 ports, 1 port}. For the 8 ports, the value of the Ng may be configured to be any one of {Ng=1,2,4,8}. For the 4 ports/2 ports, the codebook subset may be configured to be any one of *{fullyAndPartialAndNon-Coherent, partialAndNonCoherent, nonCoherent}*. When the codebook subset is configured to be *partialAndNonCoherent,* if SRS resources of the 2 ports are indicated, the codebook subset is deemed as *nonCoherent.*

In still another example, for a full coherent 8Tx UE supporting full-power mode 2, the Ng value for the 8 ports, the codebook subset for the 4 ports/2 ports and a combination of the Ng value and the codebook subset supported by the UE may be dependent on a capability of the UE. The gNB configures a corresponding Ng value and codebook subset according to the capability of the UE. For example, the combination of the Ng value and the codebook subset may be as described in the above examples in the embodiments of this disclosure.

In some embodiments, for a full coherent terminal equipment, the configuration of the codebook subset is determined by the configuration of the number Ng of antenna groups. The number of precoded co-phase ports in the 4-port/2-port codebook subset of the terminal equipment does not exceed the number of precoded co-phase ports of the 8 ports corresponding to the number Ng of the configured antenna groups, or the number of precoded co-phase ports in the 4-port/2-port codebook subset of the terminal equipment does not exceed the maximum number of precoded co-phase ports of the 8 ports that the terminal equipment is able to support.

For example, for a full coherent 8Tx UE supporting full-power mode 2, if the SRS resources in the SRS resource set are configured with different numbers of antenna ports and at least one SRS resource is configured with 8 ports, the configuration of the codebook subset is dependent on a configured Ng value. For example, the number of precoded co-phase ports of the 4 ports/2 ports does not exceed the number of the precoded co-phase ports of the 8 ports corresponding to the configured Ng value. Or, the number of precoded co-phase ports of the 4 ports/2 ports does not exceed the maximum number of the precoded co-phase ports of the 8 ports that the UE is able to support.

FIG. 7 is another schematic diagram of the configuration of the Ng value and the configuration of the codebook subset of an embodiment of this disclosure, showing a case where the Ng value is configured in association with the codebook subset for the full coherent terminal equipment. In one example, for the full coherent UE, the number of ports of the SRS resources is configured as {8 ports, 4 ports} or {8 ports, 4 ports, 1 port}. As shown in FIG. 7, for the 8 ports, the value of the Ng may be configured to be any one of {Ng=1, 2, 4, 8}. When it is configured that Ng = 1, for the 4 ports, the codebook subset may be configured as *fullyAndPartialAnd NonCoherent,* or, the codebook subset of the 4 ports may be configured as any one of *{fullyAndPartialAndNonCoherent, partialAndNonCoherent, nonCoherent}.* When it is configured that Ng = 2 or Ng = 4, for the 4 ports, the codebook subset may be configured as *partialAndNonCoherent,* or, the codebook subset of the 4 ports may be configured as either one of *{partialAndNonCoherent, nonCoherent}.* When it is configured that Ng = 8, for the 4 ports, the codebook subset may be configured as *nonCoherent.*

In another example, for the full coherent UE, the number of ports of the SRS resources is configured as {8 ports, 2 ports} or {8 ports, 2 ports, 1 port}. For the 8 ports, the value of the Ng may be configured to be any one of {Ng = 1, 2, 4, 8}. When it is configured that Ng = 1, for the 2 ports, the codebook subset may be configured as *fullyAndPartialAndNonCoherent,* or, the codebook subset of the 2 ports may be configured as either one of *{ fullyAndPartialAndNonCoherent, nonCoherent}.* When it is configured that Ng = 2 or Ng = 4, for the 2 ports, the codebook subset may be configured as *nonCoherent.* When it is configured that Ng = 8, for the 2 ports, the codebook subset may be configured as *nonCoherent.*

In a further example, for the full coherent UE, the number of ports of the SRS resources is configured as {8 ports, 4 ports, 2 ports} or {8 ports, 4 ports, 2 ports, 1 port}. For the 8 ports, the value of the Ng may be configured to be any one of {Ng = 1, 2, 4, 8}. When it is configured that Ng = 1, for the 4 ports/2 ports, the codebook subset may be configured as *fullyAndPartialAndNonCoherent,* or, the codebook subset may be configured as any one of *{fullyAndPartial AndNonCoherent, partialAndNonCoherent, nonCoherent}.* When it is configured that Ng = 2 or Ng = 4, for the 4 ports/2 ports, the codebook subset may be configured as *partialAndNonCoherent,* or, the codebook subset may be configured as either one of *{partialAndNonCoherent, nonCoherent}.* When it is configured that Ng = 8, for the 4 ports, the codebook subset may be configured as *nonCoherent.* When the codebook subset is configured *as partialAndNonCoherent,* if SRS resources of the 2 ports are indicated, it is deemed that the codebook subset is *nonCoherent.*

In still another example, for a full coherent 8Tx UE supporting full-power mode 2, the Ng value of the 8 ports, the codebook subset of the 4 ports/2 ports and a combination of the Ng value and the codebook subset supported by the UE may be dependent on a capability of the UE. The gNB configures a corresponding Ng value and codebook subset according to the capability of the UE. For example, the combination of the Ng value and the codebook subset may be as described in the above examples in the embodiments of this disclosure.

In some embodiments, for a partial coherent terminal equipment having two antenna groups, a configuration of the antenna group number Ng and a configuration of the codebook subset are independent or separate, and the number of precoded co-phase ports in a 4-port/2-port codebook subset of the terminal equipment does not exceed the maximum number of precoded co-phase ports of the 8 ports that the terminal equipment is able to support.

For example, for a partial coherent terminal equipment having two antenna groups and supporting full-power mode 2, if the SRS resources in the SRS resource set are configured with different numbers of antenna ports and at least one SRS resource is configured with 8 ports, the configuration of the Ng value and the configuration of the codebook subset are independent of each other. The number of precoded co-phase ports in the 4-port/2-port codebook subset does not exceed the maximum number of precoded co-phase ports of the 8 ports that the UE is able to support.

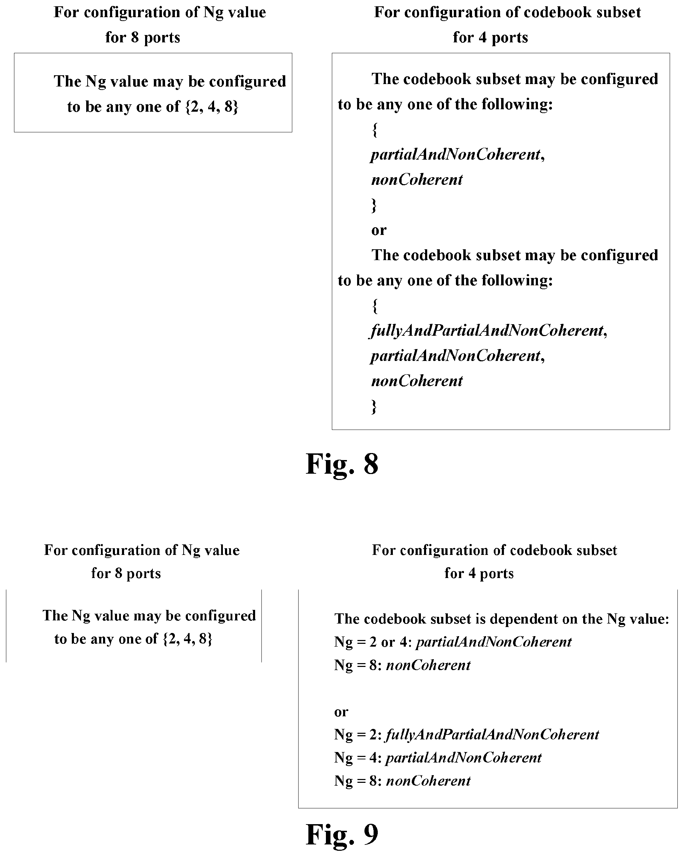

FIG. 8 is a further schematic diagram of the configuration of the Ng value and the configuration of the codebook subset of an embodiment of this disclosure, showing a case where the Ng value and the codebook subset are configured independent of each other for the partial coherent terminal equipment having two antenna groups. In one example, for the partial coherent terminal equipment having two antenna groups, the number of ports of the SRS resources is configured as {8 ports, 4 ports} or {8 ports, 4 ports, 1 port}. As shown in FIG. 8, for the 8 ports, the value of the Ng may be configured to be any one of {Ng = 2, 4, 8}. For the 4 ports, the codebook subset may be configured to be either one of *{partialAndNonCoherent, nonCoherent}.* Or, for the 4 ports, the codebook subset may be configured to be any one of *{fullyAndPartialAndNonCoherent, partialAndNonCoherent, nonCoherent}.*

In another example, for the partial coherent terminal equipment having two antenna groups, the number of ports of the SRS resources is configured as {8 ports, 2 ports} or {8 ports, 2 ports, 1 port}. For the 8 ports, the value of the Ng may be configured to be any one of {Ng = 2, 4, 8}. For the 2 ports, the codebook subset may be configured to be *nonCoherent.* Or, for the 2 ports, the codebook subset may be configured to be either one of *{fullyAndPartialAndNonCoherent, nonCoherent}.*

In a further example, for the partial coherent UE having two antenna groups, the number of ports of the SRS resources is configured as {8 ports, 4 ports, 2 ports} or {8 ports, 4 ports, 2 ports, 1 port}. For the 8 ports, the value of the Ng may be configured to be any one of {Ng = 2, 4, 8}. For the 4 ports/2 ports, the codebook subset may be configured as either one of *{partialAndNonCoherent, nonCoherent}.* When the codebook subset is configured as *partialAndNonCoherent,* if SRS resources of the 2 ports are indicated, it is deemed that the codebook subset is *nonCoherent.* Or, for the 4 ports/2 ports, the codebook subset may be configured as any one of {*fullyAndPartialAndNonCoherent, partialAndNonCoherent, nonCoherent}.* When the codebook subset is configured as *partialAndNonCoherent,* if SRS resources of the 2 ports are indicated, it is deemed that the codebook subset is *nonCoherent.*

In still another example, for the partial coherent 8Tx UE having two antenna groups and supporting full-power mode 2, the Ng value for the 8 ports, the codebook subset for the 4 ports/2 ports and a combination of the Ng value and the codebook subset supported by the UE may be dependent on a capability of the UE. The gNB configures a corresponding Ng value and codebook subset according to the capability of the UE. For example, the combination of the Ng value and the codebook subset may be as described in the above examples in the embodiments of this disclosure.

In some embodiments, for the partial coherent terminal equipment having two antenna groups, the configuration of the codebook subset is determined by the configuration of the number Ng of antenna groups. The number of precoded co-phase ports in the 4-port/2-port codebook subset of the terminal equipment does not exceed the number of precoded co-phase ports of the 8 ports corresponding to the number Ng of the configured antenna groups, or the number of precoded co-phase ports in the 4-port/2-port codebook subset of the terminal equipment does not exceed the maximum number of precoded co-phase ports of the 8 ports that the terminal equipment is able to support.

For example, for the partial coherent 8Tx UE having two antenna groups and supporting full-power mode 2, if the SRS resources in the SRS resource set are configured with different numbers of antenna ports and at least one SRS resource is configured with 8 ports, the configuration of the codebook subset is dependent on a configured Ng value. For example, the number of precoded co-phase ports of the 4 ports/2 ports does not exceed the number of the precoded co-phase ports of the 8 ports corresponding to the configured Ng value. Or, the number of precoded co-phase ports of the 4 ports/2 ports does not exceed the maximum number of the precoded co-phase ports of the 8 ports that the UE is able to support.

FIG. 9 is still another schematic diagram of the configuration of the Ng value and the configuration of the codebook subset of an embodiment of this disclosure, showing a case where the Ng value is configured in association with the codebook subset for the partial coherent terminal equipment having two antenna groups. In one example, for the partial coherent UE having two antenna groups, the number of ports of the SRS resources is configured as {8 ports, 4 ports} or {8 ports, 4 ports, 1 port}. As shown in FIG. 9, for the 8 ports, the value of Ng may be configured to be any one of {Ng = 2, 4, 8}. When it is configured that Ng = 2 or Ng = 4, for the 4 ports, the codebook subset may be configured as *partialAndNon-Coherent.* When it is configured that Ng = 8, for the 4 ports, the codebook subset may be configured as *nonCoherent.* Or, when it is configured that Ng = 2, for the 4 ports, the codebook subset may be configured as *fullyAndPartialAndNonCoherent;* when it is configured that Ng = 4, for the 4 ports, the codebook subset may be configured as *partialAndNonCoherent;* and when it is configured that Ng = 8, for the 4 ports, the codebook subset may be configured as *nonCoherent.*

In another example, for the partial coherent UE having two antenna groups, the number of ports of the SRS resources is configured as {8 ports, 2 ports} or {8 ports, 2 ports, 1 port}. For the 8 ports, the value of the Ng may be configured to be any one of {Ng = 2, 4, 8}. When it is configured that Ng = 2 or Ng = 4, for the 2 ports, the codebook subset may be configured to be *nonCoherent.* When it is configured that Ng = 8, for the 2 ports, the codebook subset may be configured to be *nonCoherent.* Or, when it is configured that Ng = 2 or Ng = 4, for the 2 ports, the codebook subset may be configured to be *fullyAndPartialAnd NonCoherent.* When it is configured that Ng = 8, for the 2 ports, the codebook subset may be configured to be *nonCoherent.*

In a further example, for the partial coherent UE having two antenna groups, the number of ports of the SRS resources is configured as {8 ports, 4 ports, 2 ports} or {8 ports, 4 ports, 2 ports, 1 port}. For the 8 ports, the value of the Ng may be configured to be any one of {Ng = 2, 4, 8}. When it is configured that Ng = 2 or Ng = 4, for the 4 ports/2 ports, the codebook subset may be configured to be *partialAndNonCoherent.* When it is configured that Ng = 8, for the 4 ports/2 ports, the codebook subset may be configured to be *nonCoherent.* When the codebook subset is configured as *partialAndNonCoherent,* if the SRS resources of the 2 ports are indicated, it is deemed that the codebook subset is *nonCoherent.* Or, when it is configured that Ng = 2, for the 4 ports/2 ports, the codebook subset may be configured as *fullyAndPartialAnd NonCoherent;* when it is configured that Ng = 4 is configured, for the 4 ports/2 ports, the codebook subset may be configured as *partialAnd NonCoherent;* and when it is configured that Ng = 8 is configured, for the 4 ports/2 ports, the codebook subset may be configured as *nonCoherent.* When the codebook subset is configured as *partialAndNonCoherent,* if the SRS resources of the 2 ports are indicated, it is deemed that the codebook subset is *nonCoherent.*

In still another example, for a partial coherent 8Tx UE having two antenna groups and supporting full-power mode 2, the Ng value for the 8 ports, the codebook subset for the 4 ports/2 ports and a combination of the Ng value and the codebook subset supported by the UE may be dependent on a capability of the UE. The gNB configures a corresponding Ng value and codebook subset according to the capability of the UE. For example, the combination of the Ng value and the codebook subset may be as described in the above examples in the embodiments of this disclosure.

In some embodiments, for a partial coherent terminal equipment having four antenna groups, the configuration of the number Ng of antenna groups and the configuration of the codebook subset are independent or separate, and the number of precoded co-phase ports of the 4 ports/2 ports codebook subset of the terminal equipment does not exceed the maximum number of the precoded co-phase ports of the 8 ports that the UE is able to support.

For example, for a partial coherent 8Tx UE having four antenna groups and supporting full-power mode 2, if the SRS resources in the SRS resource set are configured with different numbers of antenna ports and at least one SRS resource is configured with 8 ports, the configuration of the Ng value and the configuration of the codebook subset are independent of each other. The number of precoded co-phase ports in the 4-port/2-port codebook subset does not exceed the maximum number of the precoded co-phase ports of the 8 ports that the UE is able to support.

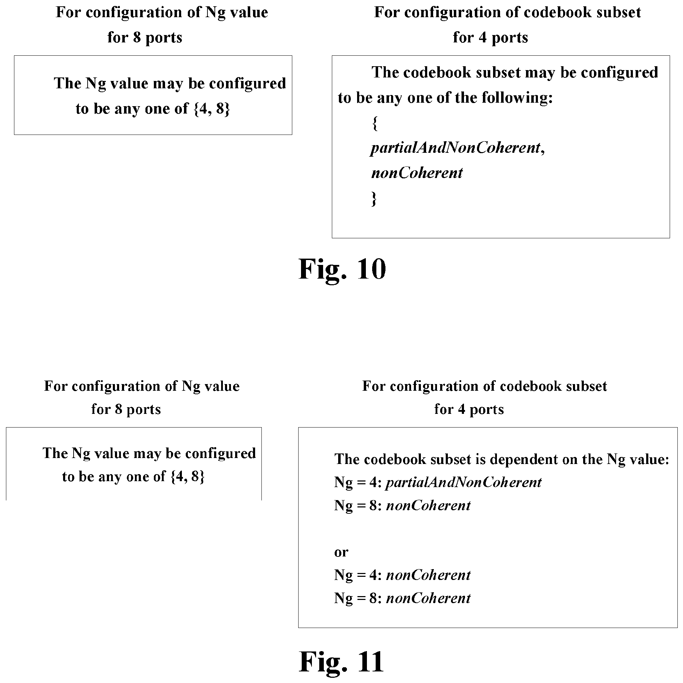

FIG. 10 is yet another schematic diagram of the configuration of the Ng value and the configuration of the codebook subset of an embodiment of this disclosure, showing a case where the Ng value and the codebook subset for the partial coherent terminal equipment having four antenna groups are configured independently. In one example, for the partial coherent UE having four antenna groups, the number of ports of the SRS resources is configured as {8 ports, 4 ports} or {8 ports, 4 ports, 1 port}. As shown in FIG. 10, for the 8 ports, the value of the Ng may be configured to be either one of {Ng = 4, 8}. For the 4 ports, the codebook subset may be configured as either one of *{partialAndNonCoherent, nonCoherent}*.

In another example, for the partial coherent UE having four antenna groups, the number of ports of the SRS resources is configured as {8 ports, 2 ports} or {8 ports, 2 ports, 1 port}. For the 8 ports, the value of the Ng may be configured to be either one of {Ng = 4, 8}. For the 2 ports, the codebook subset may be configured as *nonCoherent.* Or, for the 2 ports, the codebook subset may be configured as either one of *{fullyAndPartialAndNonCoherent, nonCoherent}*.

In a further example, for the partial coherent UE having four antenna groups, the number of ports of the SRS resources is configured as {8 ports, 4 ports, 2 ports} or {8 ports, 4 ports, 2 ports, 1 port}. For the 8 ports, the value of the Ng may be configured to be either one of {Ng = 4, 8}. For the 4 ports/2 ports, the codebook subset may be configured to be either one of *{partialAndNonCoherent, nonCoherent}.* When the codebook subset is configured to be *partialAndNonCoherent,* if SRS resources of the 2 ports are indicated, it is deemed that the codebook subset is *nonCoherent.*

In still another example, for a partial coherent 8Tx UE having four antenna groups and supporting full-power mode 2, the Ng value for the 8 ports, the codebook subset for the 4 ports/2 ports and a combination of the Ng value and the codebook subset supported by the UE may be dependent on a capability of the UE. The gNB configures a corresponding Ng value and codebook subset according to the capability of the UE. For example, the combination of the Ng value and the codebook subset may be as described in the above examples in the embodiments of this disclosure.

In some embodiments, for a partial coherent terminal equipment having four antenna groups, the configuration of the codebook subset is determined by the configuration of the number Ng of antenna groups, and the number of precoded co-phase ports of the 4 ports/2 ports codebook subset of the terminal equipment does not exceed the maximum number of the precoded co-phase ports of the 8 ports corresponding to the configured number Ng of antenna groups, or, the number of precoded co-phase ports of the 4 ports/2 ports codebook subset of the terminal equipment does not exceed the maximum number of the precoded co-phase ports of the 8 ports that the terminal equipment is able to support.

For example, for a partial coherent 8Tx UE having four antenna groups and supporting full-power mode 2, if the SRS resources in the SRS resource set are configured with different numbers of antenna ports and at least one SRS resource is configured with 8 ports, the configuration of the codebook subset is dependent on the configured Ng value. For example, the number of precoded co-phase ports of the 4 ports/2 ports does not exceed the precoded co-phase ports of the 8 ports corresponding to the configured Ng value, or, the number of precoded co-phase ports of the 4 ports/2 ports does not exceed the maximum number of the precoded co-phase ports of the 8 ports that the UE is able to support.

FIG. 11 is yet still another schematic diagram of the configuration of the Ng value and the configuration of the codebook subset of an embodiment of this disclosure, showing a case where the Ng value is configured in association with the codebook subset for the partial coherent terminal equipment having four antenna groups. In one example, for the partial coherent UE having four antenna groups, the number of ports of the SRS resources is configured as {8 ports, 4 ports} or {8 ports, 4 ports, 1 port}. As shown in FIG. 11, for the 8 ports, the value of the Ng may be configured to be either one of {Ng = 4, 8}. When it is configured that Ng = 4, for the 4 ports, the codebook subset may be configured as *partialAndNonCoherent.* When it is configured that Ng = 8, for the 4 ports, the codebook subset may be configured as *nonCoherent.* Or, when it is configured that Ng = 4 or Ng = 8, for the 4 ports, the codebook subset may be configured as *nonCoherent.*

In another example, for the partial coherent UE having four antenna groups, the number of ports of the SRS resources is configured as {8 ports, 2 ports} or {8 ports, 2 ports, 1 port}. As shown in FIG. 11, for the 8 ports, the value of the Ng may be configured to be either one of {Ng = 2, 4, 8}. When it is configured that Ng = 4 or Ng = 8, for the 2 ports, the codebook subset may be configured to be *nonCoherent.* Or, when it is configured that Ng = 4, for the 4 ports, the codebook subset may be configured to be *fullyAndPartialAnd NonCoherent,* and when it is configured that Ng = 8, for the 4 ports, the codebook subset may be configured to be *nonCoherent.*

In a further example, for the partial coherent UE having four antenna groups, the number of ports of the SRS resources is configured as {8 ports, 4 ports, 2 ports} or {8 ports, 4 ports, 2 ports, 1 port}. For the 8 ports, the value of the Ng may be configured to be either one of {Ng = 4, 8}. When it is configured that Ng = 4, for the 4 ports/2 ports, the codebook subset may be configured to be *partialAndNonCoherent* or *nonCoherent.* When it is configured that Ng = 8, for the 4 ports, the codebook subset may be configured to be *nonCoherent.* When the codebook subset is configured as *partialAnd-*

*NonCoherent,* if the SRS resources of the 2 ports are indicated, it is deemed that the codebook subset is *nonCoherent.*

In still another example, for a partial coherent 8Tx UE having four antenna groups and supporting full-power mode 2, the Ng value for the 8 ports, the codebook subset for the 4 ports/2 ports and a combination of the Ng value and the codebook subset supported by the UE may be dependent on a capability of the UE. The gNB configures a corresponding Ng value and codebook subset according to the capability of the UE. For example, the combination of the Ng value and the codebook subset may be as described in the above examples in the embodiments of this disclosure.

In some embodiments, for a non-coherent terminal equipment, the number Ng of antenna groups is configured as Ng = 8, and a 4-port/2-port codebook subset of the terminal equipment is configured as nonCoherent.

For example, for a non-coherent 8Tx UE supporting full-power mode 2, if the SRS resources in the SRS resource set are configured with different numbers of antenna ports and at least one SRS resource is configured with 8 ports, the Ng value should be configured as Ng = 8. For the 4 ports and/or 2 ports, the codebook subset should be configured as *nonCoherent.*

The configurations are described above according to the coherence types; however, this disclosure is not limited thereto.

In some embodiments, as shown in FIG. 5, the method further includes:

501: the terminal equipment reports capability information to the network device;
the capability information includes at least one or more of the following: an antenna group number Ng supported for 8 ports, a codebook subset supported for 4 ports/2 ports, and combination information between the number of the supported antenna group number Ng and the codebook subset.

In some embodiments, the network device configures the antenna group number Ng and/or the codebook subset for the terminal equipment according to the capability information.

For example, for an 8Tx UE supporting full-power mode 2 (including a full coherent UE, a partial coherent UE, and a non-coherent UE), if the SRS resources in the SRS resource set are configured with different numbers of antenna ports and at least one SRS resource is configured with 8 ports, the UE should report the Ng value for the 8 ports, the codebook subset for the 4 ports/2 ports and a combination of the Ng value and the codebook subset (reference may be made to, for example, FIGs. 6-11, for information on the combination) supported by the UE. The gNB should configure a corresponding Ng value and codebook subset according to the capability of the UE.

Table 2 shows an example of modifications corresponding to TS 38.214 (the example may be added to sub-section 6.1.1.1 of TS 38.214; however, this disclosure is not limited thereto):

Table 2

| For codebook based transmission, when higher layer parameter ul-FullPowerTransmission is set to 'fullpower-Mode2', if the SRS resources within the SRS resource set is configured with different number of ports and at least one SRS resource is configured with 8 ports, the gNB could configure corresponding Ng value and codebook subset according to the capability reported by the UE. |
| --- |

In some embodiments, 8-port transmission of the terminal equipment is configured with an antenna group number Ng and corresponding precoder. The codebook subset or precoder of 4-port/2-port transmission of the terminal equipment is obtained according to predefined information and/or the configured antenna group number Ng.

For example, for an 8Tx UE supporting full-power mode 2 (including a full coherent UE, a partial coherent UE and a non-coherent UE), if the SRS resources in the SRS resource set are configured with different numbers of antenna ports and at least one SRS resource is configured with 8 ports, the gNB only configures the Ng value for the UE.

In one example, the 4-port/2-port codebook subset may be derived from the configured Ng value according to predefined mapping. For example, *fullyAndPartialAndNonCoherent* codebook subset corresponds to Ng = *1, partialAndNonCoherent* codebook subset corresponds to Ng = 2 or Ng = 4, and *nonCoherent* codebook corresponds to Ng = 8.

In another example, the configured Ng value is applicable to 4 ports/2 ports. For example, when it is configured that Ng = 1, only full coherent precoder of the 4 ports/2 ports is configured; when it is configured that Ng = 2 or Ng = 4, only partial coherent precoder of the 4 ports or full coherent precoder of the 2 ports is configured; and when it is configured that Ng = 8, only non-coherent precoder of the 4 ports/2 ports is configured.

It can be seen from the above embodiments that for the 8Tx UE supporting full-power mode 2, if the SRS resources in the SRS resource set are configured with different numbers of antenna ports and at least one SRS resource is configured with 8 ports, how to configure the Ng value of the 8 ports and how to configure the 4-port/2-port codebook subset may be clarified.

Setting of maxRank shall be described below. Following contents may be performed in combination with the previous embodiments, or may be performed independently.

In some embodiments, in a case where the second parameter (maxRank) is configured to be greater than 4 and 4-port SRS resources are indicated, the terminal equipment determines (deems) that the second parameter (maxRank) is equal to 4, and in a case where the second parameter (maxRank) is configured to be greater than 4 and 2-port SRS resources are indicated, the terminal equipment determines (deems) that the second parameter (maxRank) is equal to 2.

For example, for an 8Tx UE supporting full-power mode 2 (including a full coherent UE, a partial coherent UE having two antenna groups, a partial coherent UE having four antenna groups and a non-coherent UE), if the SRS resources in the SRS resource set are configured with different numbers of antenna ports and at least one SRS resource is configured with 8 ports, when the parameter maxRank is configured to be greater than 4, if SRS resources of the 4 ports are indicated, it is deemed that maxRank = 4, and if SRS resources of the 2 ports are indicated, it is deemed that maxRank = 2.

Table 3 shows an example of modifications corresponding to TS 38.212 (the example may be added to sub-sections 7.3.1.1.2 and 7.3.1.1.3 of TS 38.212; however, this disclosure is not limited thereto).

Table 3

| |
|---|
| For the higher layer parameter txConfig=codebook, if ul-FullPowerTransmission is configured to fullpowerMode2, maxRank is configured to be larger than 2, and at least one SRS resource with 8 antenna ports is configured in an SRS resource set with usage set to 'codebook' and an SRS resource with 2 antenna ports is indicated via SRI in the same SRS resource set, then Table 7.3.1.1.2-4 is used.<br><br>For the higher layer parameter txConfig=codebook, if ul-FullPowerTransmission is configured to fullpowerMode2, maxRank is configured to be larger than 4, and at least one SRS resource with 8 antenna ports is configured in an SRS resource set with usage set to 'codebook' and an SRS resource with 4 antenna ports is indicated via SRI in the same SRS resource set, then Table 7.3.1.1.2-2 is used. |

Table 4 shows another example of modifications corresponding to TS 38.212 (the example may be added to sub-sections 7.3.1.1.2 and 7.3.1.1.3 of TS 38.212; however, this disclosure is not limited thereto).

Table 4

| |
|---|
| For the higher layer parameter txConfig=codebook, if ul-FullPowerTransmission is configured to fullpowerMode2, maxRank is configured to be larger than 2, and at least one SRS resource with 4 antenna ports or 8 antenna ports is configured in the SRS resource set indicated by SRS resource set indicator field if present, otherwise in an SRS resource set with usage set to 'codebook', and an SRS resource with 2 antenna ports is indicated via SRI in the same SRS resource set, then Table 7.3.1.1.2-4 is used.<br><br>For the higher layer parameter txConfig=codebook, if ul-FullPowerTransmission is configured to fullpowerMode2, maxRank is configured to be larger than 4, and at least one SRS resource with 8 antenna ports is configured in the SRS resource set indicated by SRS resource set indicator field if present, otherwise in an SRS resource set with usage set to 'codebook', and an SRS resource with 4 antenna ports is indicated via SRI in the same SRS resource set, then Table 7.3.1.1.2-2 is used. |

It can be seen from the above embodiments that for the 8Tx UE supporting full-power mode 2, if the SRS resources in the SRS resource set are configured with different numbers of antenna ports and at least one SRS resource is configured with 8 ports, the setting of maxRank may be clarified.

The TPMI field shall be described below. Following contents may be performed in combination with the previous embodiments, or may be performed independently. In addition, this disclosure is described by taking the TPMI field as an example; however, it is not limited thereto. For example, the TPMI field may be in other names, and for another example, it may be replaced with other fields.

In some embodiments, a precoder used for uplink transmission is indicated by one or more transmission precoding matrix indicator (TPMI) fields in downlink control information (DCI).

For example, for an 8Tx UE supporting full-power mode 2 (including a full coherent UE, a partial coherent UE having two antenna groups, a partial coherent UE having four antenna groups and a non-coherent UE), if the SRS resources in the SRS resource set are configured with different numbers of antenna ports and at least one SRS resource is configured with 8 ports, a length of the field used for TPMI indication (TPMI field) in the DCI should be determined in advance.

In some embodiments, for the 8 ports/4 ports/2 ports, the number of the transmission precoding matrix indicator fields is identical, and the length of the transmission precoding matrix indicator (TPMI) field is determined by a bitwidth of a TPMI field to which a first sounding reference signal resource corresponds, or the number of precoders. For example, in the configured SRS resources, the bitwidth of the TPMI field to which the first sounding reference signal resource corresponds is longest or the number of precoders corresponding thereto is largest.

For example, for the 8 ports/4 ports/2 ports, the number of TPMI fields is identical, in which case the length of the TPMI field is determined by a bitwidth of a TPMI to which a certain SRS resource corresponds or the number of precoders corresponding thereto. In all the configured SRS resources, the bitwidth of the TPMI to which this SRS resource correspond is longest or the number of precoders corresponding thereto is largest.

In one example, K SRS resources are configured in the SRS resource set, and for an SRS resource *i*, a bitwidth of a TPMI to which it corresponds is $L_i(i = 1, ... K)$. Hence, a final length of the TPMI field may be determined as follows:

$$L = \max \{L_1, L_2, ..., L_K\}$$

For a certain SRS resource, if a bitwidth of a TPMI to which it corresponds is less than max $\{L_1, L_2, ..., L_K\}$, some all-zero most significant bits (MSBs) will be inserted into the TPMI field.

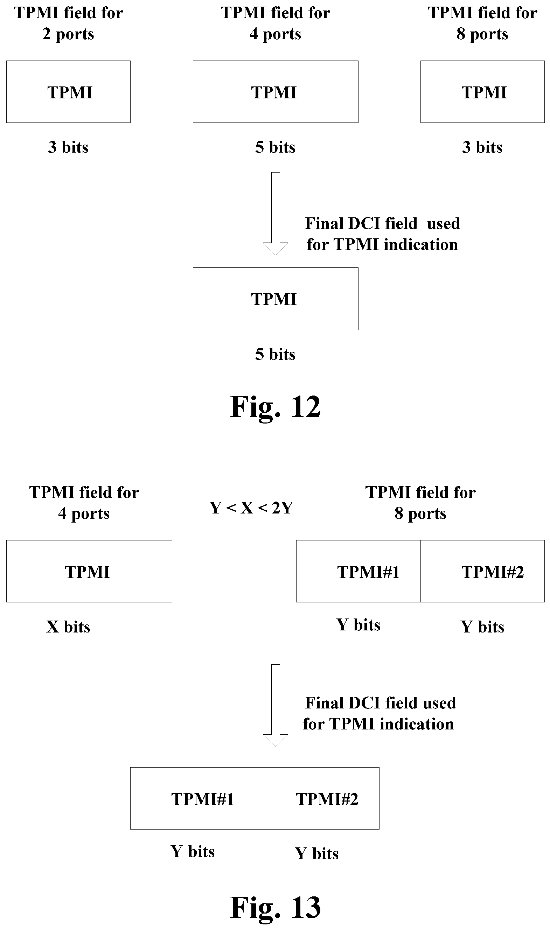

FIG. 12 is an exemplary diagram of determining a length of a TPMI field of an embodiment of this disclosure. As shown in FIG. 12, for example, three SRS resources are configured, a first SRS resource is with 2 ports, and a bitwidth of a corresponding TPMI is 3bits, a second SRS resource is with 4 ports, and a bitwidth of a corresponding TPMI is 5bits, and a third SRS resource is with 8 ports, and a bitwidth of a corresponding TPMI is 3bits, hence, a final length of the TPMI field is determined to be 5 bits. When the first SRS resource or the third SRS resource is indicated (i.e. the 2 ports or the 8 ports are indicated), former 2 bits of the TPMI field are set to be all zeros, that is, 2 bits of a most significant bit (MSB) are set to be 0.

Table 5 shows an example of modifications corresponding to TS 38.212 (the example may be added to sub-sections 7.3.1.1.2 and 7.3.1.1.3 of TS 38.212; however, this disclosure is not limited thereto).

Table 5

| For the higher layer parameter txConfig = codebook, if different SRS resources with different number of antenna ports are configured, the bitwidth is determined according to **the TPMI length corresponding to one SRS resource, which is the maximum TPMI length** among the configured SRS resources in all SRS resource set(s) with usage set to 'codebook'. If **TPMI length corresponding to** a configured SRS resource in the set is less than the maximum **TPMI length** a number of most significant bits with value set to '0' are inserted to the field. |
| --- |

In another example, K SRS resources are configured in the SRS resource set, and for an SRS resource i, the number of precoders to which it corresponds is $N_i(i = 1, ... K)$. Hence, the length of the TPMI field may be determined as follows:

$$L = \lceil \log_2 \max \{N_1, N_2, ..., N_K\} \rceil$$

For a certain SRS resource, if the number of precoders to which it corresponds is less than max $\{N_1, N_2, ..., N_K\}$, some all-zero most significant bits (MSBs) will be inserted into the TPMI field.

Table 6 shows an example of modifications corresponding to TS 38.212 (the example may be applicable to sub-sections 7.3.1.1.2 and 7.3.1.1.3 of TS 38.212; however, this disclosure is not limited thereto).

Table 6

| For the higher layer parameter txConfig = codebook, if different SRS resources with different number of antenna ports are configured, the bitwidth is determined according to **the SRS resource, which corresponds to the maximum number of precoders,** among the configured SRS resources in all SRS resource set(s) with usage set to 'codebook'. If the number of **precoders** for a configured SRS resource in the set is less than the maximum number of **precoders,** a number of most significant bits with value set to '0' are inserted to the field. |
| --- |

In some embodiments, for the 8 ports/4 ports/2 ports, numbers of the transmission precoding matrix indicator (TPMI) fields are different. For example, for the 8 ports, there are two TPMI fields, and for 4 ports/2 ports, there is one TPMI field. Lengths of all transmission precoding matrix indicator (TPMI) fields for the 8 ports are used to determine a field length of the DCI.

FIG. 13 is another exemplary diagram of determining the length of the TPMI field of an embodiment of this disclosure. As shown in FIG. 13, for example, two SRS resources are configured, a first SRS resource is with 4 ports, and a bitwidth of a corresponding TPMI is X bits, and a second SRS resource is with 8 ports, and a bitwidth of a corresponding TPMI is 2Y bits, where, Y < X < 2Y.

As shown in FIG. 13, the length of the TPMI field for the 8 ports is used to determine the length of the DCI field, and TPMI #1 (X bits) and TPMI #2 (Y bits) exist in the DCI. When 4 ports are indicated, X bits of TPMI #1 and TPMI #2 are used for 4-port TPMI indication, and (2Y-X) bits of the MSB are set to be 0; and when 8 ports are indicated, TPMI #1 and TPMI #2 are used for 8-port TPMI indication.

In some embodiments, for the 8 ports/4 ports/2 ports, numbers of the transmission precoding matrix indicator (TPMI) fields are different, and length(s) of one or more transmission precoding matrix indicator (TPMI) fields for the 8 ports is/are in consistence with length(s) of the transmission precoding matrix indicator (TPMI) field(s) for the 4 ports/2 ports.

For example, for a certain TPMI field (or several TPMI fields) for the 8 ports, such as a first TPMI field, its length needs to be in consistence with that/those for the 4 ports/2 ports.

In some embodiments, for the 8 ports/4 ports/2 ports, numbers of transmission precoding matrix indicator (TPMI) fields are different, the length(s) of one or more transmission precoding matrix indicator (TPMI) fields for the 8 ports is/are in not consistence with the length(s) of the transmission precoding matrix indicator (TPMI) field(s) for the 4 ports/2 ports, and bitwidth(s) of the transmission precoding matrix indicator (TPMI) field(s) is/are determined by a maximum length of the transmission precoding matrix indicator (TPMI) field(s) for the 8 ports/4 ports/2 ports.

For example, if a length of a certain TPMI field (or several TPMI fields) for the 8 ports, such as a first TPMI field, is different from that/those for the 4 ports/2 ports, a final bitwidth of the TPMI field is dependent on a maximum length of a TPMI/TPMIs to which the 8 ports/4 ports/2 ports correspond(s). And if a length of a TPMI to which a certain SRS resource corresponds is less than the maximum TPMI length, some all-zero most significant bits shall be inserted into the TPMI field.

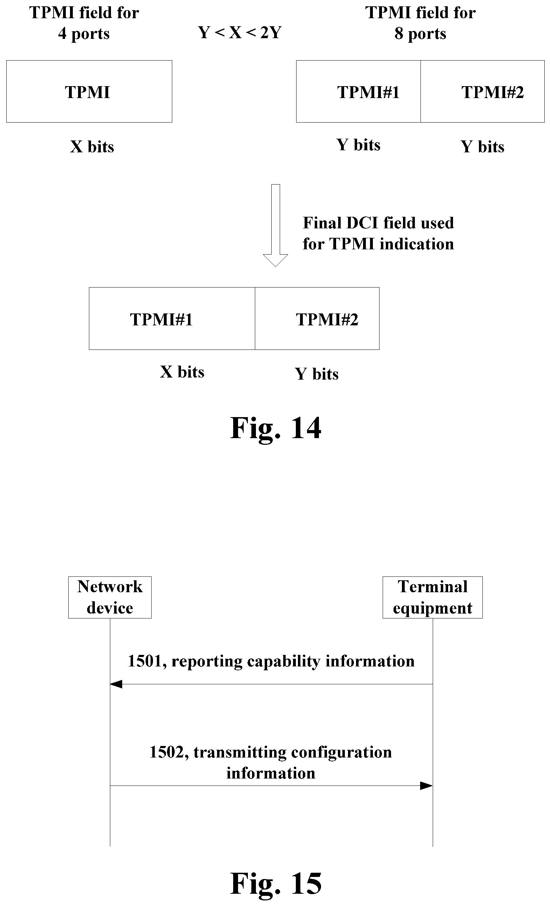

FIG. 14 is a further exemplary diagram of determining the length of the TPMI field of an embodiment of this disclosure. As shown in FIG. 14, for example, two SRS resources are configured, a first SRS resource is with 4 ports, and a bitwidth of a corresponding TPMI is X bits, and a second SRS resource is with 8 ports, and a bitwidth of a corresponding TPMI is 2Y bits, where, $Y < X < 2Y$.

As shown in FIG. 14, a length of a first TPMI field for the 8 ports is used to determine the length of the DCI field, and TPMI #1 (Xbits) and TPMI #2 (Ybits) exist in the DCI. When 4 ports are indicated, TPMI #1 is used for 4-port TPMI indication, and TPMI #2 is ignored; and when 8 ports are indicated, TPMI #1 and TPMI #2 are used for 8-port TPMI indication. In TPMI #1, (X-Y) bits of the MSB are set to be 0.

In some embodiments, the number Ng of antenna groups is configured for 8 ports, and a codebook subset is configured for transmission with 4 ports/2 ports, a length of a transmission precoding matrix indicator (TPMI) field for the 4 ports/2 ports is less than or equal to a length of a transmission precoding matrix indicator (TPMI) field for the 8 ports.

For example, for an 8Tx UE supporting full-power mode 2 (including a full coherent UE, a partial coherent UE having two antenna groups, a partial coherent UE having four antenna groups, and a non-coherent UE), if the SRS resources in the SRS resource set are configured with different numbers of antenna ports and at least one SRS resource is configured with 8 ports, in configuring the Ng value for transmission with 8 ports of the UE and configuring the codebook subset for transmission with 4 ports/2 ports of the UE, it should be ensured that the length of the TPMI field for the 4 ports/2 ports is less than or equal to the length of the TPMI field for the 8-ports.

It can be seen from the above embodiments that for the 8Tx UE supporting full-power mode 2, if the SRS resources in the SRS resource set are configured with different numbers of antenna ports and at least one SRS resource is configured with 8 ports, the length of the TPMI field may be clarified.

The embodiments of this disclosure are illustrated above in tables 1-6; however, this disclosure is not limited thereto. In addition, reference may be made to relevant techniques for some parameters or terms in these tables, which shall not be repeated herein any further. The full-power mode 2 of the embodiments of this disclosure may be referred to as Mode 2, for example, other names may also be used. Reference may be made to ul-FullPwrMode2 in relevant techniques for specific content; however, this disclosure is not limited thereto. Modes with functions identical or similar to ul-FullPwrMode2 in Rel-16 are within the scope of this disclosure.

The above implementations only illustrate the embodiments of this disclosure. However, this disclosure is not limited thereto, and appropriate variants may be made on the basis of these implementations. For example, the above implementations may be executed separately, or one or more of them may be executed in a combined manner.

It can be seen from the above embodiments that for the 8Tx UE supporting full-power mode 2, if the SRS resources in the SRS resource set are configured with different numbers of antenna ports and at least one SRS resource is configured with 8 ports, how to configure the Ng and the codebook subset may be clarified.

Embodiments of a second aspect

The embodiments of this disclosure provide a precoding configuration method, which shall be described from a network device side. The embodiments of the second may be combined with the embodiments of the first aspect, and contents identical to those in the embodiments of the first aspect shall not be repeated herein any further.

FIG. 15 is a schematic diagram of the precoding configuration method of an embodiment of this disclosure. As shown in FIG. 15, the method includes:

1502: a network device transmits configuration information to a terminal equipment;

for sounding reference signal (SRS) resources in an SRS resource set in which a first parameter (usage) is set to be a first value (codebook), different numbers of antenna ports are configured, and at least one SRS resource is configured with 8 ports; an antenna group number Ng and corresponding precoder(s) are configured for 8-port transmission of the terminal equipment and a codebook subset is configured for 4-port/2-port transmission of the terminal equipment, or, an antenna group number Ng and corresponding precoder(s) are configured for 8-port transmission of the terminal equipment.

In some embodiments, as shown in FIG. 15, the method may further include:

1501: the network device receives capability information reported by the terminal equipment;
the capability information includes at least one or more of the following: an antenna group number Ng supported for 8 ports, a codebook subset supported for 4 ports/2 ports, or combination information between the number of the supported antenna group number Ng and the codebook subset.

It should be noted that FIG. 15 only schematically illustrates the embodiments of this disclosure; however, this disclosure is not limited thereto. For example, an order of execution of the operations may be appropriately adjusted, and furthermore, some other operations may be added, or some operations therein may be reduced. And appropriate variants may be made by those skilled in the art according to the above contents, without being limited to what is contained in FIG. 15.

The above implementations only illustrate the embodiments of this disclosure. However, this disclosure is not limited thereto, and appropriate variants may be made on the basis of these implementations. For example, the above implementations may be executed separately, or one or more of them may be executed in a combined manner.

It can be seen from the above embodiments that for the 8Tx UE supporting full-power mode 2, if the SRS resources in the SRS resource set are configured with different numbers of antenna ports and at least one SRS resource is configured with 8 ports, how to configure the Ng and the codebook subset may be clarified.

Embodiments of a third aspect

The embodiments of this disclosure provide a precoding configuration apparatus. The apparatus may be, for example, a terminal equipment, or one or some components or assemblies configured in the terminal equipment. Contents in the embodiments identical to those in the embodiments of the first aspect shall not be described herein any further.

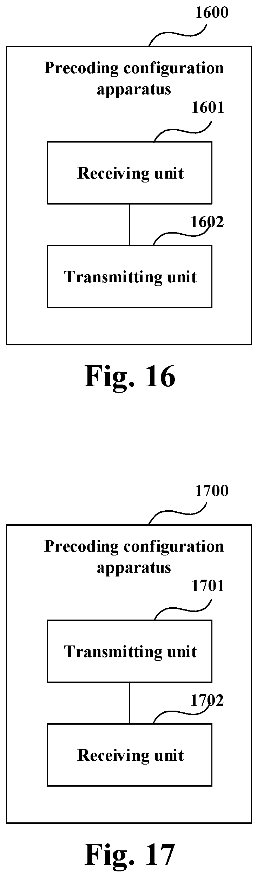

FIG. 16 is a schematic diagram of the precoding configuration apparatus of an embodiment of this disclosure. As shown in FIG. 16, a precoding configuration apparatus 1600 includes:

a receiving unit 1601 configured to receive configuration information from a network device;
for sounding reference signal (SRS) resources in an SRS resource set in which a first parameter (usage) is set to be a first value (codebook), different numbers of antenna ports are configured, and at least one SRS resource is configured with 8 ports; an antenna group number Ng and corresponding precoder(s) are configured for 8-port transmission of the terminal equipment and a codebook subset is configured for 4-port/2-port transmission of the terminal equipment, or, an antenna group number Ng and corresponding precoder(s) are configured for 8-port transmission of the terminal equipment.

In some embodiments, an antenna group number Ng and a corresponding precoder(s) are configured for 8-port transmission of the terminal equipment, and a codebook subset is configured for 4-port/2-port transmission of the terminal equipment.

In some embodiments, for a full coherent terminal equipment, a configuration of the antenna group number Ng and a configuration of the codebook subset are independent or separate, and the number of precoded co-phase ports in a 4-port/2-port codebook subset of the terminal equipment does not exceed the maximum number of co-phase ports of 8-port precoder that the terminal equipment is able to support.

In some embodiments, for a full coherent terminal equipment, the configuration of the codebook subset is determined by the configuration of the antenna group number Ng, and the number of precoded co-phase ports in a 4-port/2-port codebook subset of the terminal equipment does not exceed the number of co-phase ports of 8-port precoder corresponding to the configured antenna group number Ng, or, the number of precoded co-phase ports in a 4-port/2-port codebook subset of the terminal equipment does not exceed the maximum number of co-phase ports of 8-port precoder that the terminal equipment is able to support.

In some embodiments, for a partial coherent terminal equipment having two antenna groups, a configuration of the antenna group number Ng and a configuration of the codebook subset are independent or separate, and the number of precoded co-phase ports in a 4-port/2-port codebook subset of the terminal equipment does not exceed the maximum number of co-phase ports of 8-port precoder that the terminal equipment is able to support.

In some embodiments, for a partial coherent terminal equipment having two antenna groups, the configuration of the codebook subset is determined by the configuration of the antenna group number Ng; the number of precoded co-phase ports in a 4-port/2-port codebook subset of the terminal equipment does not exceed the number of co-phase ports of 8-port precoder corresponding to the configured antenna group number Ng, or, the number of precoded co-phase ports in a 4-port/2-port codebook subset of the terminal equipment does not exceed the maximum number of co-phase ports of 8-port precoder that the terminal equipment is able to support.

In some embodiments, for a partial coherent terminal equipment having four antenna groups, a configuration of the antenna group number Ng and a configuration of the codebook subset are independent or separate; the number of precoded co-phase ports in a 4-port/2-port codebook subset of the terminal equipment does not exceed the maximum number of co-phase ports of 8-port precoder that the terminal equipment is able to support.

In some embodiments, for a partial coherent terminal equipment having four antenna groups, the configuration of the codebook subset is determined by the configuration of the antenna group number Ng; the number of precoded co-phase ports in a 4-port/2-port codebook subset of the terminal equipment does not exceed the number of co-phase ports of 8-port precoder corresponding to the configured antenna group number Ng, or, the number of precoded co-phase ports in a 4-port/2-port codebook subset of the terminal equipment does not exceed the maximum number of co-phase ports of 8-port precoder that the terminal equipment is able to support.

In some embodiments, for a non-coherent terminal equipment, the antenna group number Ng is configured as Ng = 8; the 4-port/2-port codebook subset of the terminal equipment is configured as nonCoherent.

In some embodiments, as shown in FIG. 16, the apparatus may further include:

> a transmitting unit 1602 configured to report capability information to the network device;
> the capability information includes at least one or more of the following: an antenna group number Ng supported for 8 ports, a codebook subset supported for 4 ports/2 ports, or combination information between the number of the supported antenna group number Ng and the codebook subset.

In some embodiments, the network device configures the antenna group number Ng and/or the codebook subset for the terminal equipment according to the capability information.

In some embodiments, the antenna group number Ng and corresponding precoder(s) are configured for 8-port transmission of the terminal equipment, and the codebook subset or precoder(s) for the 4-port/2-port transmission of the terminal equipment is obtained according to predefined information and/or a configured antenna group number Ng.

In some embodiments, in a case where a second parameter (maxRank) is configured to be greater than 4 and an SRS resource of 4 ports is indicated, the terminal equipment determines that the second parameter maxRank is equal to 4; and in a case where the second parameter maxRank is configured to be greater than 4 and an SRS resource of 2 ports is indicated, the terminal equipment determines that the second parameter maxRank is equal to 2.

In some embodiments, a precoder used for uplink transmission is indicated by one or more transmission precoding matrix indicator (TPMI) fields in downlink control information (DCI).

In some embodiments, for the 8 ports/4 ports/2 ports, the number of the transmission precoding matrix indicator fields is identical, and a length of the transmission precoding matrix indicator (TPMI) field is determined by a bitwidth of a TPMI field to which a first SRS resource corresponds, or the number of precoders.

In some embodiments, in a configured SRS, the bitwidth of the TPMI field corresponding to the first SRS resource is the longest, or the number of precoders is the largest.

In some embodiments, for the 8 ports/4 ports/2 ports, the number of the transmission precoding matrix indicator (TPMI) fields is different, and lengths of all transmission precoding matrix indicator (TPMI) fields for the 8 ports are used to determine a field length of the DCI.

In some embodiments, for the 8 ports/4 ports/2 ports, the number of the transmission precoding matrix indicator (TPMI) fields is different, and length(s) of one or more transmission precoding matrix indicator (TPMI) fields for the 8 ports is/are consistent with lengths of transmission precoding matrix indicator (TPMI) fields for the 4 ports/2 ports.

In some embodiments, for the 8 ports/4 ports/2 ports, the number of the transmission precoding matrix indicator (TPMI) fields is different; and length(s) of one or more transmission precoding matrix indicator (TPMI) fields for the 8 ports is/are not consistent with lengths of transmission precoding matrix indicator (TPMI) fields for the 4 ports/2 ports; the bitwidth of the transmission precoding matrix indicator (TPMI) field is determined by a maximum length of transmission precoding matrix indicator (TPMI) fields for the 8 ports/4 ports/2 ports.

In some embodiments, the antenna group number Ng is configured for the 8 ports, and the codebook subset is configured for transmission with 4 ports/2 ports, lengths of transmission precoding matrix indicator (TPMI) fields for the 4 ports/2 ports are less than or equal to lengths of the transmission precoding matrix indicator (TPMI) fields for the 8 ports.

It should be noted that the components or modules related to this disclosure are only described above. However, this disclosure is not limited thereto, and the precoding configuration apparatus 1600 may further include other components or modules, and reference may be made to related techniques for particulars of these components or modules.

Furthermore, for the sake of simplicity, connection relationships between the components or modules or signal profiles thereof are only illustrated in FIG. 16. However, it should be understood by those skilled in the art that such related techniques as bus connection, etc., may be adopted. And the above components or modules may be implemented by hardware, such as a processor, a memory, a transmitter, and a receiver, etc., which are not limited in the embodiment of this disclosure.

With the embodiments of this disclosure, for the 8Tx UE supporting full-power mode 2, if the SRS resources in the SRS resource set are configured with different numbers of antenna ports and at least one SRS resource is configured with 8 ports, how to configure the Ng and the codebook subset may be clarified.

Embodiments of a fourth aspect

The embodiments of this disclosure provide a precoding configuration apparatus. The apparatus may be, for example, a network device, or one or some components or assemblies configured in the network device. Contents in the embodiments identical to those in the embodiments of the first and second aspects shall not be described herein any further.

FIG. 17 is a schematic diagram of the precoding configuration apparatus of an embodiment of this disclosure. As shown in FIG. 17, a precoding configuration apparatus 1700 includes:

a transmitting unit 1701 configured to transmit configuration information to a terminal equipment;
for sounding reference signal (SRS) resources in an SRS resource set in which a first parameter (usage) is set to be a first value (codebook), different numbers of antenna ports are configured, and at least one SRS resource is configured with 8 ports; an antenna group number Ng and corresponding precoder(s) are configured for 8-port transmission of the terminal equipment and a codebook subset is configured for 4-port/2-port transmission of the terminal equipment, or, an antenna group number Ng and corresponding precoder(s) are configured for 8-port transmission of the terminal equipment.

In some embodiments, as shown in FIG. 17, the precoding configuration apparatus 1700 may further include:

a receiving unit 1702 configured to receive capability information reported by the terminal equipment;
the capability information includes at least one or more of the following: an antenna group number Ng supported for the 8 ports, a codebook subset supported for 4 ports/2 ports, or combination information between the supported antenna group number Ng and the codebook subset.

It should be noted that the components or modules related to this disclosure are only described above. However, this disclosure is not limited thereto, and the precoding configuration apparatus 1700 may further include other components or modules, and reference may be made to related techniques for particulars of these components or modules.

Furthermore, for the sake of simplicity, connection relationships between the components or modules or signal profiles thereof are only illustrated in FIG. 17. However, it should be understood by those skilled in the art that such related techniques as bus connection, etc., may be adopted. And the above components or modules may be implemented by hardware, such as a processor, a memory, a transmitter, and a receiver, etc., which are not limited in the embodiment of this disclosure.

With the embodiments of this disclosure, for the 8Tx UE supporting full-power mode 2, if the SRS resources in the SRS resource set are configured with different numbers of antenna ports and at least one SRS resource is configured with 8 ports, how to configure the Ng and the codebook subset may be clarified.

Embodiments of a fifth aspect

The embodiments of this disclosure provide communication system, and reference may be made to FIG. 1, with contents identical to those in the embodiments of the first to the fourth aspects being not going to be described herein any further.

In some embodiments, the communication system 100 may at least include:

a terminal equipment that is capable of supporting 8Tx uplink transmission and supports full-power mode 2; the terminal equipment is configured to receive configuration information from a network device; for sounding reference signal (SRS) resources in an SRS resource set in which a first parameter (usage) is set to be a first value (codebook),

different numbers of antenna ports are configured, and at least one SRS resource is configured with 8 ports; an antenna group number Ng and corresponding precoder(s) are configured for 8-port transmission of the terminal equipment and a codebook subset is configured for 4-port/2-port transmission of the terminal equipment, or, an antenna group number Ng and corresponding precoder(s) are configured for 8-port transmission of the terminal equipment; and

a network device configured to transmit the configuration information.

The embodiments of this disclosure further provide a network device, which may be, for example, a base station. However, this disclosure is not limited thereto, and it may also be another network device.

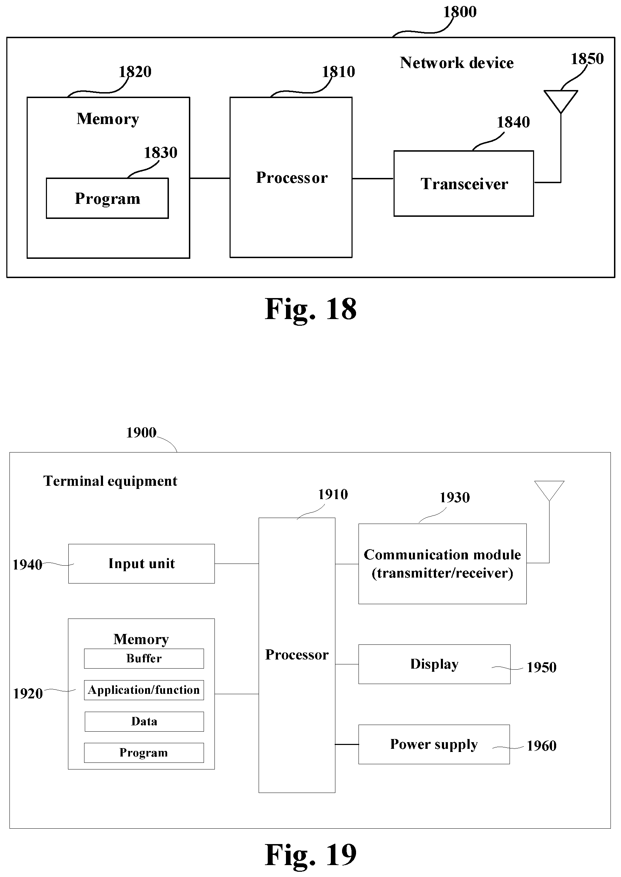

FIG. 18 is a schematic diagram of a structure of the network device of an embodiment of this disclosure. As shown in FIG. 18, a network device 1800 may include a processor 1810 (such as a central processing unit (CPU)) and a memory 1820, the memory 1820 being coupled to the processor 1810. The memory 1820 may store various data, and furthermore, it may store a program 1830 for information processing, and execute the program 1830 under control of the processor 1810.

For example, the processor 1810 may be configured to execute a program to carry out the precoding configuration method in the embodiments of the second aspect. For example, the processor 1810 may be configured to perform the following control: transmitting configuration information to a terminal equipment;

for sounding reference signal (SRS) resources in an SRS resource set in which a first parameter (usage) is set to be a first value (codebook), different numbers of antenna ports are configured, and at least one SRS resource is configured with 8 ports; an antenna group number Ng and corresponding precoder(s) are configured for 8-port transmission of the terminal equipment and a codebook subset is configured for 4-port/2-port transmission of the terminal equipment, or, an antenna group number Ng and corresponding precoder(s) are configured for 8-port transmission of the terminal equipment.

Furthermore, as shown in FIG. 18, the network device 1800 may include a transceiver 1840, and an antenna 1850, etc. Functions of the above components are similar to those in the relevant art, and shall not be described herein any further. It should be noted that the network device 1800 does not necessarily include all the parts shown in FIG. 18, and furthermore, the network device 1800 may include parts not shown in FIG. 18, and the relevant art may be referred to.

The embodiments of this disclosure further provide a terminal equipment; however, this disclosure is not limited thereto, and it may also be another equipment.

FIG. 19 is a schematic diagram of the terminal equipment of an embodiment of this disclosure. As shown in FIG. 19, a terminal equipment 1900 may include a processor 1910 and a memory 1920, the memory 1920 storing data and a program and being coupled to the processor 1910. It should be noted that this figure is illustrative only, and other types of structures may also be used, so as to supplement or replace this structure and achieve a telecommunications function or other functions.

For example, the processor 1910 may be configured to execute a program to carry out the precoding configuration method as described in the embodiments of the first aspect. For example, the processor 1910 may be configured to execute the following control: receiving configuration information from a network device;

for sounding reference signal (SRS) resources in an SRS resource set in which a first parameter (usage) is set to be a first value (codebook), different numbers of antenna ports are configured, and at least one sounding reference signal resource is configured with 8 ports; an antenna group number Ng and corresponding precoder(s) are configured for 8-port transmission of the terminal equipment and a codebook subset is configured for 4-port/2-port transmission of the terminal equipment, or, an antenna group number Ng and corresponding precoder(s) are configured for 8-port transmission of the terminal equipment.

As shown in FIG. 19, the terminal equipment 1900 may further include a communication module 1930, an input unit 1940, a display 1950, and a power supply 1960; functions of the above components are similar to those in the relevant art, which shall not be described herein any further. It should be noted that the terminal equipment 1900 does not necessarily include all the parts shown in FIG. 19, and the above components are not necessary. Furthermore, the terminal equipment 1900 may include parts not shown in FIG. 19, and the relevant art may be referred to.

An embodiment of this disclosure provides a computer readable program, which, when executed in a terminal equipment, causes the terminal equipment to carry out the precoding configuration method as described in the embodiments of the first aspect.

An embodiment of this disclosure provides a computer storage medium, including a computer readable program, which causes a terminal equipment to carry out the precoding configuration method as described in the embodiments of the first aspect.

An embodiment of this disclosure provides a computer readable program, which, when executed in a network device, causes the network device to carry out the precoding configuration method as described in the embodiments of the second aspect.

An embodiment of this disclosure provides a computer storage medium, including a computer readable program, which causes a network device to carry out the precoding configuration method as described in the embodiments of the second aspect.

The above apparatuses and methods of this disclosure may be implemented by hardware, or by hardware in combination with software. This disclosure relates to such a computer-readable program that when the program is executed by a logic device, the logic device is enabled to carry out the apparatus or components as described above, or to carry out the methods or steps as described above. This disclosure also relates to a storage medium for storing the above program, such as a hard disk, a floppy disk, a CD, a DVD, and a flash memory, etc.

The methods/apparatuses described with reference to the embodiments of this disclosure may be directly embodied as hardware, software modules executed by a processor, or a combination thereof. For example, one or more functional block diagrams and/or one or more combinations of the functional block diagrams shown in the drawings may either correspond to software modules of procedures of a computer program, or correspond to hardware modules. Such software modules may respectively correspond to the steps shown in the drawings. And the hardware module, for example, may be carried out by firming the soft modules by using a field programmable gate array (FPGA).

The soft modules may be located in an RAM, a flash memory, an ROM, an EPROM, an EEPROM, a register, a hard disc, a floppy disc, a CD-ROM, or any memory medium in other forms known in the art. A memory medium may be coupled to a processor, so that the processor may be able to read information from the memory medium, and write information into the memory medium; or the memory medium may be a component of the processor. The processor and the memory medium may be located in an ASIC. The soft modules may be stored in a memory of a mobile terminal, and may also be stored in a memory card of a pluggable mobile terminal. For example, if equipment (such as a mobile terminal) employs an MEGA-SIM card of a relatively large capacity or a flash memory device of a large capacity, the soft modules may be stored in the MEGA-SIM card or the flash memory device of a large capacity.

One or more functional blocks and/or one or more combinations of the functional blocks in the drawings may be realized as a universal processor, a digital signal processor (DSP), an application-specific integrated circuit (ASIC), a field programmable gate array (FPGA) or other programmable logic devices, discrete gate or transistor logic devices, discrete hardware component or any appropriate combinations thereof carrying out the functions described in this application. And the one or more functional block diagrams and/or one or more combinations of the functional block diagrams in the drawings may also be realized as a combination of computing equipment, such as a combination of a DSP and a microprocessor, multiple processors, one or more microprocessors in communication combination with a DSP, or any other such configuration.

This disclosure is described above with reference to particular embodiments. However, it should be understood by those skilled in the art that such a description is illustrative only, and not intended to limit the protection scope of the present invention. Various variants and modifications may be made by those skilled in the art according to the spirits and principle of the present invention, and such variants and modifications fall within the scope of the present invention.

As to implementations containing the above embodiments, following supplements are further disclosed.

1. A precoding configuration method, applicable to a terminal equipment capable of supporting 8Tx uplink transmission, the terminal equipment supporting full-power mode 2, the method including:

receiving configuration information by the terminal equipment from a network device,
wherein for sounding reference signal (SRS) resources in an SRS resource set in which a first parameter (usage) is set to be a first value (codebook), different numbers of antenna ports are configured, and at least one SRS resource is configured with 8 ports; an antenna group number Ng and corresponding precoder(s) are configured for 8-port transmission of the terminal equipment and a codebook subset is configured for 4-port/2-port transmission of the terminal equipment, or, an antenna group number Ng and corresponding precoder(s) are configured for 8-port transmission of the terminal equipment.

2. The method according to supplement 1, wherein an antenna group number Ng and corresponding precoder(s) are configured for 8-port transmission of the terminal equipment, and a codebook subset is configured for 4-port/2-port transmission of the terminal equipment.

3. The method according to supplement 2, wherein for a full coherent terminal equipment, a configuration of the antenna group number Ng and a configuration of the codebook subset are independent or separate,
and the number of precoded co-phase ports in a 4-port/2-port codebook subset of the terminal equipment does not exceed the maximum number of co-phase ports of 8-port precoder(s) that the terminal equipment is able to support.

4. The method according to supplement 2, wherein for a full coherent terminal equipment, the configuration of the codebook subset is determined by the configuration of the antenna group number Ng;
and the number of precoded co-phase ports in a 4-port/2-port codebook subset of the terminal equipment does not exceed the number of co-phase ports of 8-port precoder(s) corresponding to the configured antenna group number Ng, or, the number of precoded co-phase ports in a 4-port/2-port codebook subset of the terminal equipment does not exceed the maximum number of co-phase ports of 8-port precoder(s) that the terminal equipment is able support.

5. The method according to supplement 2, wherein for a partial coherent terminal equipment having two antenna groups, a configuration of the antenna group number Ng and a configuration of the codebook subset are independent or separate;

and the number of precoded co-phase ports in a 4-port/2-port codebook subset of the terminal equipment does not exceed the maximum number of co-phase ports of 8-port precoder(s) that the terminal equipment is able to support.

6. The method according to supplement 2, wherein for a partial coherent terminal equipment having two antenna groups, the configuration of the codebook subset is determined by the configuration of the antenna group number Ng; and the number of precoded co-phase ports in a 4-port/2-port codebook subset of the terminal equipment does not exceed the number of co-phase ports of 8-port precoder(s) corresponding to the configured antenna group number Ng, or, the number of precoded co-phase ports in a 4-port/2-port codebook subset of the terminal equipment does not exceed the maximum number of co-phase ports of 8-port precoder(s) that the terminal equipment is able to support.

7. The method according to supplement 2, wherein for a partial coherent terminal equipment having four antenna groups, a configuration of the antenna group number Ng and a configuration of the codebook subset are independent or separate;

and the number of precoded co-phase ports in a 4-port/2-port codebook subset of the terminal equipment does not exceed the maximum number of co-phase ports of 8-port precoder(s) that the terminal equipment is able to support.

8. The method according to supplement 2, wherein for a partial coherent terminal equipment having four antenna groups, the configuration of the codebook subset is determined by the configuration of the antenna group number Ng; and the number of precoded co-phase ports in a 4-port/2-port codebook subset of the terminal equipment does not exceed the number of co-phase ports of 8-port precoder(s) corresponding to the configured antenna group number Ng, or, the number of precoded co-phase ports in a 4-port/2-port codebook subset of the terminal equipment does not exceed the maximum number of co-phase ports of 8-port precoder(s) that the terminal equipment is able to support.

9. The method according to supplement 2, wherein for a non-coherent terminal equipment, the antenna group number Ng is configured as Ng = 8; and the 4-port/2-port codebook subset of the terminal equipment is configured as nonCoherent.

10. The method according to any one of supplements 1-9, wherein the method further includes:

reporting capability information by the terminal equipment to the network device,
wherein the capability information includes at least one or more of the following: an antenna group number Ng supported for 8 ports, a codebook subset supported for 4 ports/2 ports, or combination information between the number of the supported antenna group number Ng and the codebook subset.

11. The method according to supplement 10, wherein the network device configures the antenna group number Ng and/or the codebook subset for the terminal equipment according to the capability information.

12. The method according to supplement 1, wherein 8-port transmission of the terminal equipment is configured with the antenna group number Ng and corresponding precoder(s).

13. The method according to supplement 12, wherein the codebook subset or precoder(s) for the 4-port/2-port transmission of the terminal equipment is obtained according to predefined information and/or a configured antenna group number Ng.

14. The method according to any one of supplements 1-13, wherein

in a case where a second parameter (maxRank) is configured to be greater than 4 and an SRS resource with 4 ports is indicated, the terminal equipment determines (deems) that the second parameter maxRank is equal to 4;
in a case where the second parameter maxRank is configured to be greater than 4 and an SRS resource with 2 ports is indicated, the terminal equipment determines (deems) that the second parameter maxRank is equal to 2.

15. The method according to any one of supplements 1-14, wherein a precoder used for uplink transmission is indicated by one or more transmission precoding matrix indicator (TPMI) fields in downlink control information (DCI).

16. The method according to supplement 15, wherein for the 8 ports/4 ports/2 ports, the number of the transmission precoding matrix indicator (TPMI) fields is identical;

and a length of the TPMI field is determined by a bitwidth of a TPMI field to which a first SRS resource corresponds, or the number of precoders.

17. The method according to supplement 16, wherein in a configured SRS, the bitwidth of the TPMI field corresponding to the first SRS resource is the longest, or the number of precoders is the largest.

18. The method according to supplement 15, wherein for the 8 ports/4 ports/2 ports, numbers of the TPMI fields are different;

and lengths of all transmission precoding matrix indicator (TPMI) fields for the 8 ports are used to determine a field length of the DCI.

19. The method according to supplement 15, wherein for the 8 ports/4 ports/2 ports, the number of the transmission precoding matrix indicator (TPMI) fields is different;

and length(s) of one or more transmission precoding matrix indicator (TPMI) fields for the 8 ports is/are consistent with lengths of transmission precoding matrix indicator (TPMI) fields for the 4 ports/2 ports.

20. The method according to supplement 15, wherein for the 8 ports/4 ports/2 ports, the number of the transmission precoding matrix indicator (TPMI) fields is different;

and length(s) of one or more transmission precoding matrix indicator (TPMI) fields for the 8 ports is/are not consistent with lengths of transmission precoding matrix indicator (TPMI) fields for the 4 ports/2 ports; the bitwidth of the transmission precoding matrix indicator (TPMI) field is determined by a maximum length of transmission precoding matrix indicator (TPMI) fields for the 8 ports/4 ports/2 ports.

21. The method according to any one of supplements 15-20, wherein the antenna group number Ng is configured for the 8 ports, and the codebook subset is configured for transmission with the 4 ports/2 ports, lengths of transmission precoding matrix indicator (TPMI) fields for the 4 ports/2 ports are less than or equal to lengths of the transmission precoding matrix indicator (TPMI) fields for the 8 ports.

22. A precoding configuration method, applicable to a terminal equipment capable of supporting 8 transmission (8Tx) uplink transmission, the terminal equipment supporting full-power mode 2, the method including:

receiving configuration information by the terminal equipment from a network device,

wherein in a case where a second parameter (maxRank) is configured to be greater than 4 and an SRS resource with 4 ports is indicated, the terminal equipment determines (deems) that the second parameter maxRank is equal to 4;

in a case where the second parameter maxRank is configured to be greater than 4 and an SRS resource with 2 ports is indicated, the terminal equipment determines (deems) that the second parameter maxRank is equal to 2.

23. A precoding configuration method, applicable to a terminal equipment capable of supporting 8 transmission (8Tx) uplink transmission, the terminal equipment supporting full-power mode 2, the method including:

receiving configuration information by the terminal equipment from a network device,

wherein a precoder used for uplink transmission is indicated by one or more transmission precoding matrix indicator (TPMI) fields in downlink control information (DCI).

24. The method according to supplement 23, wherein for the 8 ports/4 ports/2 ports, the number of the transmission precoding matrix indicator (TPMI) fields is identical;

and a length of the TPMI field is determined by a bitwidth of a TPMI field to which a first SRS resource corresponds, or the number of precoders.

25. The method according to supplement 24, wherein in a configured SRS, the bitwidth of the TPMI field corresponding to the first SRS resource is the longest, or the number of precoders is the largest.

26. The method according to supplement 23, wherein for the 8 ports/4 ports/2 ports, numbers of the TPMI fields are different;

and lengths of all transmission precoding matrix indicator (TPMI) fields for the 8 ports are used to determine a field length of the DCI.

27. The method according to supplement 23, wherein for the 8 ports/4 ports/2 ports, the number of the transmission precoding matrix indicator (TPMI) fields is different;

and length(s) of one or more transmission precoding matrix indicator (TPMI) fields for the 8 ports is/are consistent with lengths of transmission precoding matrix indicator (TPMI) fields for the 4 ports/2 ports.

28. The method according to supplement 23, wherein for the 8 ports/4 ports/2 ports, the number of the transmission precoding matrix indicator (TPMI) fields is different;

and length(s) of one or more transmission precoding matrix indicator (TPMI) fields for the 8 ports is/are not consistent with lengths of transmission precoding matrix indicator (TPMI) fields for the 4 ports/2 ports; the bitwidth of the transmission precoding matrix indicator (TPMI) field is determined by a maximum length of transmission precoding matrix indicator (TPMI) fields for the 8 ports/4 ports/2 ports.

29. The method according to any one of supplements 23-28, wherein the antenna group number Ng is configured for the 8 ports, and the codebook subset is configured for transmission with the 4 ports/2 ports, lengths of transmission precoding matrix indicator (TPMI) fields for the 4 ports/2 ports are less than or equal to lengths of the transmission precoding matrix indicator (TPMI) fields for the 8 ports.

30. A precoding configuration method, applicable to a network device, the method including:

transmitting configuration information by the network device to a terminal equipment,

wherein for sounding reference signal (SRS) resources in an SRS resource set in which a first parameter (usage) is set to be a first value (codebook), different numbers of antenna ports are configured, and at least one SRS resource is configured with 8 ports; an antenna group number Ng and corresponding precoder(s) are configured for 8-port transmission of the terminal equipment and a codebook subset is configured for 4-port/2-port transmission of the terminal equipment, or, an antenna group number Ng and corresponding precoder(s) are configured for 8-port transmission of the terminal equipment.

31. The method according to supplement 30, wherein n antenna group number Ng and corresponding precoder(s) are configured for 8 -port transmission of the terminal equipment, and a codebook subset is configured for 4-port/2-port transmission of the terminal equipment.

32. The method according to supplement 31, wherein for a full coherent terminal equipment, a configuration of the antenna group number Ng and a configuration of the codebook subset are independent or separate, and the number of precoded co-phase ports in a 4-port/2-port codebook subset of the terminal equipment does not exceed the maximum number of co-phase ports of 8-port precoder(s) that the terminal equipment is able to support.

33. The method according to supplement 31, wherein for a full coherent terminal equipment, the configuration of the codebook subset is determined by the configuration of the antenna group number Ng; and the number of precoded co-phase ports in a 4-port/2-port codebook subset of the terminal equipment does not exceed the number of co-phase ports of 8-port precoder(s) corresponding to the configured antenna group number Ng, or, the number of precoded co-phase ports in a 4-port/2-port codebook subset of the terminal equipment does not exceed the maximum number of co-phase ports of 8-port precoder(s) that the terminal equipment is able support.

34. The method according to supplement 31, wherein for a partial coherent terminal equipment having two antenna groups, a configuration of the antenna group number Ng and a configuration of the codebook subset are independent or separate; and the number of precoded co-phase ports in a 4-port/2-port codebook subset of the terminal equipment does not exceed the maximum number of co-phase ports of 8-port precoder(s) that the terminal equipment is able to support.

35. The method according to supplement 31, wherein for a partial coherent terminal equipment having two antenna groups, the configuration of the codebook subset is determined by the configuration of the antenna group number Ng; and the number of precoded co-phase ports in a 4-port/2-port codebook subset of the terminal equipment does not exceed the number of co-phase ports of 8-port precoder(s) corresponding to the configured antenna group number Ng, or, the number of precoded co-phase ports in a 4-port/2-port codebook subset of the terminal equipment does not exceed the maximum number of co-phase ports of 8-port precoder(s) that the terminal equipment is able to support.

36. The method according to supplement 31, wherein for a partial coherent terminal equipment having four antenna groups, a configuration of the antenna group number Ng and a configuration of the codebook subset are independent or separate; and the number of precoded co-phase ports in a 4-port/2-port codebook subset of the terminal equipment does not exceed the maximum number of co-phase ports of 8-port precoder(s) that the terminal equipment is able to support.

37. The method according to supplement 31, wherein for a partial coherent terminal equipment having four antenna groups, the configuration of the codebook subset is determined by the configuration of the antenna group number Ng; and the number of precoded co-phase ports in a 4-port/2-port codebook subset of the terminal equipment does not exceed the number of co-phase ports of 8-port precoder(s) corresponding to the configured antenna group number Ng, or, the number of precoded co-phase ports in a 4-port/2-port codebook subset of the terminal equipment does not exceed the maximum number of co-phase ports of 8-port precoder(s) that the terminal equipment is able to support.

38. The method according to supplement 31, wherein for a non-coherent terminal equipment, the antenna group number Ng is configured as Ng = 8; and the 4-port/2-port codebook subset of the terminal equipment is configured as nonCoherent.

39. The method according to any one of supplements 30-38, wherein the method further includes:

receiving, by the network device, capability information reported by the terminal equipment, wherein the capability information includes at least one or more of the following: an antenna group number Ng supported for 8 ports, a codebook subset supported for 4 ports/2 ports, or combination information between the number of the supported antenna group number Ng and the codebook subset.

40. The method according to supplement 39, wherein the network device configures the antenna group number Ng and/or the codebook subset for the terminal equipment according to the capability information.

41. The method according to supplement 30, wherein 8-port transmission of the terminal equipment is configured with the antenna group number Ng and corresponding precoder(s).

42. The method according to supplement 41, wherein the codebook subset or precoder(s) for the 4-port/2-port transmission of the terminal equipment is obtained according to predefined information and/or a configured antenna group number Ng.

43. The method according to any one of supplements 30-42, wherein in a case where a second parameter (maxRank) is configured to be greater than 4 and an SRS resource with 4 ports is indicated, the terminal equipment determines (deems) that the second parameter maxRank is equal to 4;

in a case where the second parameter maxRank is configured to be greater than 4 and an SRS resource with 2 ports is indicated, the terminal equipment determines (deems) that the second parameter maxRank is equal to 2.

44. The method according to any one of supplements 30-43, wherein a precoder used for uplink transmission is indicated by one or more transmission precoding matrix indicator (TPMI) fields in downlink control information (DCI).

45. The method according to supplement 44, wherein for the 8 ports/4 ports/2 ports, the number of the transmission precoding matrix indicator (TPMI) fields is identical;

and a length of the TPMI field is determined by a bitwidth of a TPMI field to which a first SRS resource corresponds, or the number of precoders.

46. The method according to supplement 45, wherein in a configured SRS, the bitwidth of the TPMI field corresponding to the first SRS resource is the longest, or the number of precoders is the largest.

47. The method according to supplement 44, wherein for the 8 ports/4 ports/2 ports, numbers of the TPMI fields are different;

and lengths of all transmission precoding matrix indicator (TPMI) fields for the 8 ports are used to determine a field length of the DCI.

48. The method according to supplement 44, wherein for the 8 ports/4 ports/2 ports, the number of the transmission precoding matrix indicator (TPMI) fields is different;

and length(s) of one or more transmission precoding matrix indicator (TPMI) fields for the 8 ports is/are consistent with lengths of transmission precoding matrix indicator (TPMI) fields for the 4 ports/2 ports.

49. The method according to supplement 44, wherein for the 8 ports/4 ports/2 ports, the number of the transmission precoding matrix indicator (TPMI) fields is different;

and length(s) of one or more transmission precoding matrix indicator (TPMI) fields for the 8 ports is/are not consistent with lengths of transmission precoding matrix indicator (TPMI) fields for the 4 ports/2 ports; the bitwidth of the transmission precoding matrix indicator (TPMI) field is determined by a maximum length of transmission precoding matrix indicator (TPMI) fields for the 8 ports/4 ports/2 ports.

50. The method according to any one of supplements 44-49, wherein the antenna group number Ng is configured for the 8 ports, and the codebook subset is configured for transmission with the 4 ports/2 ports, lengths of transmission precoding matrix indicator (TPMI) fields for the 4 ports/2 ports are less than or equal to lengths of the transmission precoding matrix indicator (TPMI) fields for the 8 ports.

51. A terminal equipment, including a memory and a processor, the memory storing a computer program, and the processor being configured to execute the computer program to carry out the precoding configuration method as described in any one of supplements 1-29.

52. A network device, including a memory and a processor, the memory storing a computer program, and the processor being configured to execute the computer program to carry out the precoding configuration method as described in any one of supplements 30-50.

## Claims

1. A precoding configuration apparatus, configured in a terminal equipment capable of supporting 8Tx uplink transmission, the terminal equipment supporting full-power mode 2, the apparatus comprising:

   a receiving unit configured to receive configuration information from a network device, wherein for sounding reference signal resources in a sounding reference signal resource set in which a first parameter usage is set to be a first value codebook, different numbers of antenna ports are configured, and at least one sounding reference signal resource is configured with 8 ports; an antenna group number Ng and corresponding precoder(s) are configured for 8-port transmission of the terminal equipment and a codebook subset is configured for 4-port/2-port transmission of the terminal equipment, or, an antenna group number Ng and corresponding precoder(s) are configured for 8-port transmission of the terminal equipment.

2. The apparatus according to claim 1, wherein an antenna group number Ng and corresponding precoder(s) are configured for 8-port transmission of the terminal equipment, and a codebook subset is configured for 4-port/2-port transmission of the terminal equipment.

3. The apparatus according to claim 2, wherein for a full coherent terminal equipment, a configuration of the antenna group number Ng and a configuration of the codebook subset are independent or separate, and the number of precoded co-phase ports in a 4-port/2-port codebook subset of the terminal equipment does not exceed the maximum number of co-phase ports of 8-port precoder(s) that the terminal equipment is able to support;

or,

for a full coherent terminal equipment, a configuration of the codebook subset is determined by the configuration of the antenna group number Ng, and the number of precoded co-phase ports in a 4-port/2-port codebook subset of the terminal equipment does not exceed the number of precoded co-phase ports of 8-port precoder(s) corresponding to the configured antenna group number Ng, or, the number of precoded co-phase ports in a 4-port/2-port codebook subset of the terminal equipment does not exceed the maximum number of co-phase ports of 8-port precoder(s) that the terminal equipment is able to support.

4. The apparatus according to claim 2, wherein for a partial coherent terminal equipment having two antenna groups, a configuration of the antenna group number Ng and a configuration of the codebook subset are independent or separate, and the number of precoded co-phase ports in a 4-port/2-port codebook subset of the terminal equipment does not exceed the maximum number of co-phase ports of 8-port precoder(s) that the terminal equipment is able to support;

or,

for a partial coherent terminal equipment having two antenna groups, a configuration of the codebook subset is determined by a configuration of the antenna group number Ng; the number of precoded co-phase ports in a 4-port/2-port codebook subset of the terminal equipment does not exceed the number of precoded co-phase ports of 8-port precoder(s) corresponding to the configured antenna group number Ng, or, the number of precoded co-phase ports in a 4-port/2-port codebook subset of the terminal equipment does not exceed the maximum number of co-phase ports of 8-port precoder(s) that the terminal equipment is able to support.

5. The apparatus according to claim 2, wherein for a partial coherent terminal equipment having four antenna groups, a configuration of the antenna group number Ng and a configuration of the codebook subset are independent or separate; the number of precoded co-phase ports in a 4-port/2-port codebook subset of the terminal equipment does not exceed the maximum number of co-phase ports of 8-port precoder(s) that the terminal equipment is able to support;

or,

for a partial coherent terminal equipment having four antenna groups, a configuration of the codebook subset is determined by a configuration of the antenna group number Ng; the number of precoded co-phase ports in a 4-port/2-port codebook subset of the terminal equipment does not exceed the number of precoded co-phase ports of 8-port precoder(s) corresponding to the configured antenna group number Ng, or, the number of precoded co-phase ports in a 4-port/2-port codebook subset of the terminal equipment does not exceed the maximum number of co-phase ports of 8-port precoder(s) that the terminal equipment is able to support.

6. The apparatus according to claim 2, wherein for a non-coherent terminal equipment, the antenna group number Ng is configured as Ng = 8; the 4-port/2-port codebook subset of the terminal equipment is configured as nonCoherent.

7. The apparatus according to claim 1, wherein the apparatus further comprises:

   a transmitting unit configured to report capability information to the network device,
   wherein the capability information includes at least one or more of the following: an antenna group number Ng supported for 8 ports, a codebook subset supported for 4 ports/2 ports, or combination information between the number of the supported antenna group number Ng and the codebook subset.

8. The apparatus according to claim 7, wherein the network device configures the antenna group number Ng and/or the codebook subset for the terminal equipment according to the capability information.

9. The apparatus according to claim 1, wherein 8-port transmission of the terminal equipment is configured with the antenna group number Ng and the corresponding precoder(s); and
the codebook subset or precoder(s) for the 4-port/2-port transmission of the terminal equipment is obtained according to predefined information and/or a configured antenna group number Ng.

10. The apparatus according to claim 1, wherein in a case where a second parameter maxRank is configured to be greater than 4 and a sounding reference signal resource with 4 ports is indicated, the terminal equipment determines that the second parameter maxRank is equal to 4; and

in a case where the second parameter maxRank is configured to be greater than 4 and a sounding reference signal resource with 2 ports is indicated, the terminal equipment determines that the second parameter maxRank is equal to 2.

11. The apparatus according to claim 1, wherein a precoder used for uplink transmission is indicated by one or more transmission precoding matrix indicator fields in downlink control information.

12. The apparatus according to claim 11, wherein for 8 ports/4 ports/2 ports, the number of the transmission precoding matrix indicator fields is identical; and
a length of a transmission precoding matrix indicator field is determined by a bitwidth of a transmission precoding matrix indicator field to which a first sounding reference signal resource corresponds, or the number of precoders.

13. The apparatus according to claim 12, wherein in a configured sounding reference signal resource, the bitwidth of the transmission precoding matrix indicator field corresponding to the first sounding reference signal resource is the longest, or the number of precoders is the largest.

14. The apparatus according to claim 11, wherein for 8 ports/4 ports/2 ports, the number of the transmission precoding matrix indicator fields is different; and
lengths of all transmission precoding matrix indicator fields for the 8-port are used to determine a field length of the downlink control information.

15. The apparatus according to claim 11, wherein for 8 ports/4 ports/2 ports, the number of the transmission precoding matrix indicator fields is different; and
length(s) of one or more transmission precoding matrix indicator fields for the 8 ports is/are consistent with lengths of transmission precoding matrix indicator fields for the 4 ports/2 ports.

16. The apparatus according to claim 11, wherein for 8 ports/4 ports/2 ports, the number of the transmission precoding matrix indicator fields is different; and
length(s) of one or more transmission precoding matrix indicator fields for the 8 ports is/are not consistent with lengths of transmission precoding matrix indicator fields for the 4 ports/2 ports; the bitwidth of the transmission precoding matrix indicator field is determined by a maximum length of transmission precoding matrix indicator fields for the 8 ports/4 ports/2 ports.

17. The apparatus according to claim 11, wherein the antenna group number Ng is configured for 8 ports, and the codebook subset is configured for 4-port/2-port transmission, lengths of transmission precoding matrix indicator fields for 4 ports/2 ports are less than or equal to lengths of the transmission precoding matrix indicator fields for the 8 ports.

18. A precoding configuration apparatus, configured in a network device, wherein the apparatus comprises:

a transmitting unit configured to transmit configuration information to a terminal equipment,
wherein for sounding reference signal resources in a sounding reference signal resource set in which a first parameter usage is set to be a first value codebook, different numbers of antenna ports are configured, and at least one sounding reference signal resource is configured with 8 ports; an antenna group number Ng and corresponding precoder(s) are configured for 8-port transmission of the terminal equipment and a codebook subset is configured for 4-port/2-port transmission of the terminal equipment, or, an antenna group number Ng and corresponding precoder(s) are configured for 8-port transmission of the terminal equipment.

19. The apparatus according to claim 18, wherein the apparatus further comprises:

a receiving unit configured to receive capability information reported by the terminal equipment,
wherein the capability information includes at least one or more of the following: an antenna group number Ng supported for 8 ports, a codebook subset supported for 4 ports/2 ports, or combination information between the number of the supported antenna group number Ng and the codebook subset.

20. A communication system, comprising:

a terminal equipment, capable of supporting 8Tx uplink transmission and supporting full-power mode 2, configured to receive configuration information from a network device, wherein for sounding reference signal resources in a sounding reference signal resource set in which a first parameter usage is set to be a first value codebook, different numbers of antenna ports are configured, and at least one sounding reference signal resource is configured with 8 ports; an antenna group number Ng and corresponding precoder(s) are configured for 8-port transmission of the terminal equipment and a codebook subset is configured for 4-port/2-port transmission of the terminal equipment, or, an antenna group number Ng and corresponding precoder(s) are configured for 8-port transmission of the terminal equipment; and

a network device configured to transmit the configuration information.

100

101

103

102

## Fig. 1

Full coherent UE ⟹ *fullyAndPartialAndNonCoherent* Codebook subset

- **Full coherent precoder**
- **partial coherent precoder**
- **Non-coherent precoder**

partial coherent UE ⟹ *partialAndNonCoherent* Codebook subset

- **partial coherent precoder**
- **Non-coherent precoder**

Non-coherent UE ⟹ *nonCoherent* Codebook subset

- **Non-coherent precoder**

## Fig. 2

Full coherent UE ⟹ *fullyAndPartialAndNonCoherent* Codebook subset

- **Full coherent precoder**
- **Non-coherent precoder**

Non-coherent UE ⟹ *nonCoherent* Codebook subset

- **Non-coherent precoder**

## Fig. 3

Ng = 1 ⟺ | **Full coherent precoder** |

Ng = 2 ⟺ | **Partial coherent precoder (Ng = 2)** |

Ng = 4 ⟺ | **Partial coherent precoder (Ng = 4)** |

Ng = 8 ⟺ | **Non-coherent precoder** |

## Fig. 4

501

A terminal equipment transmits capability information to a network device; the capability information includes at least one or more of the following: an antenna group number Ng supported for 8 ports, a codebook subset supported for 4ports/2 ports, or combination information between the supported Ng and the codebook subset

502

the terminal equipment receives configuration information from a network device, wherein for SRS resources in a SRS resource set in which usage is set to be codebook, different numbers of antenna ports are configured, and at least one SRS resource is configured with 8 ports; Ng and corresponding precoders are configured for 8-port transmission of the terminal equipment and a codebook subset is configured for 4-port/ 2-port transmission of the terminal equipment, or, Ng and corresponding precoders are configured for 8-port transmission of the terminal equipment

## Fig. 5

**For configuration of Ng value for 8 ports**

> The Ng value may be configured to be any one of {1, 2, 4, 8}

**For configuration of codebook subset for 4 ports**

> The codebook subset may be configured to be any one of:
> {
> *fullyAndPartialAndNonCoherent,*
> *partialAndNonCoherent,*
> *nonCoherent*
> }

# Fig. 6

**For configuration of Ng value for 8 ports**

> The Ng value may be configured to be any one of {1, 2, 4, 8}

**For configuration of codebook subset for 4 ports**

> The codebook subset is dependent on the Ng value:
> Ng = 1: *fullyAndPartialAndNonCoherent*
> Ng = 2 or 4: *partialAndNonCoherent*
> Ng = 8: *nonCoherent*
>
> or
> Ng = 1: any one of the following:
> {*fullyAndPartialAndNonCoherent,*
> *partialAndNonCoherent,*
> *nonCoherent*}
> Ng = 2 or 4: any one of the following:
> {*partialAndNonCoherent,*
> *nonCoherent*}
> Ng = 8: *nonCoherent*

# Fig. 7

**For configuration of Ng value for 8 ports**

> The Ng value may be configured to be any one of {2, 4, 8}

**For configuration of codebook subset for 4 ports**

> The codebook subset may be configured to be any one of the following:
> {
> *partialAndNonCoherent,*
> *nonCoherent*
> }
> or
> The codebook subset may be configured to be any one of the following:
> {
> *fullyAndPartialAndNonCoherent,*
> *partialAndNonCoherent,*
> *nonCoherent*
> }

# Fig. 8

**For configuration of Ng value for 8 ports**

> The Ng value may be configured to be any one of {2, 4, 8}

**For configuration of codebook subset for 4 ports**

> The codebook subset is dependent on the Ng value:
> Ng = 2 or 4: *partialAndNonCoherent*
> Ng = 8: *nonCoherent*
>
> or
> Ng = 2: *fullyAndPartialAndNonCoherent*
> Ng = 4: *partialAndNonCoherent*
> Ng = 8: *nonCoherent*

# Fig. 9

**For configuration of Ng value for 8 ports**

| |
|---|
| The Ng value may be configured to be any one of {4, 8} |

**For configuration of codebook subset for 4 ports**

| |
|---|
| The codebook subset may be configured to be any one of the following:<br>{<br>*partialAndNonCoherent,*<br>*nonCoherent*<br>} |

## Fig. 10

**For configuration of Ng value for 8 ports**

| |
|---|
| The Ng value may be configured to be any one of {4, 8} |

**For configuration of codebook subset for 4 ports**

| |
|---|
| The codebook subset is dependent on the Ng value:<br>Ng = 4: *partialAndNonCoherent*<br>Ng = 8: *nonCoherent*<br><br>or<br>Ng = 4: *nonCoherent*<br>Ng = 8: *nonCoherent* |

## Fig. 11

TPMI field for
2 ports

TPMI field for
4 ports

TPMI field for
8 ports

TPMI

TPMI

TPMI

3 bits

5 bits

3 bits

Final DCI field used
for TPMI indication

TPMI

5 bits

# Fig. 12

TPMI field for
4 ports

$Y < X < 2Y$

TPMI field for
8 ports

| TPMI | | TPMI#1 | TPMI#2 |
|------|--|--------|--------|

X bits

Y bits

Y bits

Final DCI field used
for TPMI indication

| TPMI#1 | TPMI#2 |
|--------|--------|

Y bits

Y bits

# Fig. 13

TPMI field for
4 ports

Y < X < 2Y

TPMI field for
8 ports

| TPMI |
|---|

X bits

| TPMI#1 | TPMI#2 |
|---|---|

Y bits  Y bits

Final DCI field used
for TPMI indication

| TPMI#1 | TPMI#2 |
|---|---|

X bits  Y bits

**Fig. 14**

| Network device | | Terminal equipment |
|---|---|---|

1501, reporting capability information

1502, transmitting configuration
information

**Fig. 15**

1600

Precoding configuration
apparatus
1601

Receiving unit

1602

Transmitting unit

**Fig. 16**

1700

Precoding configuration
apparatus
1701

Transmitting unit

1702

Receiving unit

**Fig. 17**

**Fig. 18**

**Fig. 19**

## INTERNATIONAL SEARCH REPORT

| International application No. |
|---|
| **PCT/CN2023/113703** |

### A. CLASSIFICATION OF SUBJECT MATTER

H04B 7/0456(2017.01)i

According to International Patent Classification (IPC) or to both national classification and IPC

### B. FIELDS SEARCHED

Minimum documentation searched (classification system followed by classification symbols)

IPC:H04B: H04W

Documentation searched other than minimum documentation to the extent that such documents are included in the fields searched

Electronic data base consulted during the international search (name of data base and, where practicable, search terms used)

3GPP, CNTXT, ENTXTC, VEN: 八, 8, 端口, 8Tx, 码本, 满功率, 模式2, 探测参考信号, SRS, 探测RS, 天线集合数量, 码本子集, 用, 相干, coherent, full+, power, nonCoherent, codebook, subset, number, antenna group, mode2, ul-FullPwrMode, ULFPTx, Ng, usage

### C. DOCUMENTS CONSIDERED TO BE RELEVANT

| Category* | Citation of document, with indication, where appropriate, of the relevant passages | Relevant to claim No. |
|---|---|---|
| A | WO 2023146666 A1 (QUALCOMM INC.) 03 August 2023 (2023-08-03) description, paragraph 0123-paragraph 0191 | 1-20 |
| A | CN 111867091 A (DATANG MOBILE COMMUNICATIONS EQUIPMENT CO., LTD.) 30 October 2020 (2020-10-30) entire document | 1-20 |
| A | US 2023148388 A1 (SAMSUNG ELECTRONICS CO., LTD.) 11 May 2023 (2023-05-11) entire document | 1-20 |
| A | INTEL CORP. "Remaining details of full Tx power UL transmission" *3GPP TSG RAN WG1 Meeting #98 R1-1908655*, 30 August 2019 (2019-08-30), entire document | 1-20 |

☐ Further documents are listed in the continuation of Box C.    ☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **07 May 2024** | **10 May 2024** |

| Name and mailing address of the ISA/CN | Authorized officer |
|---|---|
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
**Information on patent family members**

International application No.

**PCT/CN2023/113703**

| Patent document cited in search report | | | Publication date (day/month/year) | Patent family member(s) | | | Publication date (day/month/year) |
|---|---|---|---|---|---|---|---|
| WO | 2023146666 | A1 | 03 August 2023 | US | 2023239863 | A1 | 27 July 2023 |
| CN | 111867091 | A | 30 October 2020 | WO | 2020221108 | A1 | 05 November 2020 |
| | | | | KR | 20210154255 | A | 20 December 2021 |
| | | | | EP | 3965498 | A1 | 09 March 2022 |
| | | | | US | 2022217646 | A1 | 07 July 2022 |
| | | | | CN | 116567833 | A | 08 August 2023 |
| US | 2023148388 | A1 | 11 May 2023 | WO | 2023048469 | A1 | 30 March 2023 |

Form PCT/ISA/210 (patent family annex) (July 2022)